(19) Europäisches Patentamt / European Patent Office / Office européen des brevets

(11) EP 1 745 609 B1

(12) EUROPEAN PATENT SPECIFICATION

(45) Date of publication and mention of the grant of the patent:
**26.06.2013 Bulletin 2013/26**

(21) Application number: **05742015.0**

(22) Date of filing: **11.05.2005**

(51) Int Cl.:
*H04L 12/70* (2013.01)    *H04L 29/06* (2006.01)

(86) International application number:
**PCT/IB2005/001278**

(87) International publication number:
**WO 2005/112367 (24.11.2005 Gazette 2005/47)**

(54) **BUFFER LEVEL SIGNALING FOR RATE ADAPTATION IN MULTIMEDIA STREAMING**

PUFFEREBENEN-SIGNALISIERUNG ZUR RATENANPASSUNG BEIM MULTIMEDIA-STREAMING

SIGNALISATION DU NIVEAU TAMPON POUR ADAPTATION DE DEBIT DANS UNE DIFFUSION MULTIMEDIA

(84) Designated Contracting States:
**AT BE BG CH CY CZ DE DK EE ES FI FR GB GR HU IE IS IT LI LT LU MC NL PL PT RO SE SI SK TR**

(30) Priority: **12.05.2004   US 844062**
**28.07.2004   US 901015**

(43) Date of publication of application:
**24.01.2007   Bulletin 2007/04**

(73) Proprietor: **Nokia Corporation**
**02150 Espoo (FI)**

(72) Inventors:
• **LEON, David**
  **33000 BORDEAUX (FR)**
• **HANNUKSELA, Miska**
  **FIN-36110 Ruutana (FI)**
• **AKSU, Emre, Baris**
  **FIN-33721 Tampere (FI)**
• **WANG, Ye-Kui**
  **FIN-33720 Tampere (FI)**

(74) Representative: **Khan, Mohammed Saiful Azam et al**
**Potter Clarkson LLP**
**The Belgrave Centre**
**Talbot Street**
**Nottingham NG1 5GG (GB)**

(56) References cited:
WO-A2-2004/008673    US-A1- 2004 057 420
US-A1- 2004 066 742    US-A1- 2004 193 762

• NOKIA: 'Signalling for rate adaptation with AVC codec.' TSG-SA4#31MEETING., [Online] 17 May 2004 - 21 May 2004, XP002990952 Retrieved from the Internet: <URL:www.3GPP.org>

**Description**

<u>Field of the Invention</u>

The present invention relates generally to multimedia streaming and, more particularly, to rate adaptation between a server and a client in multimedia streaming services.

<u>Background of the Invention</u>

In a multimedia streaming service, there are three participants involved: a streaming server, a streaming client and a transmission channel or an underlying network. Usually it is the transmission channel that is the bottleneck of the service, both in terms of throughput and in terms of reliability (i.e., if no throughput bitrate guarantee is assumed), but throughput limitations can occur also at the client and/or at the server.

In a real-time streaming system, due to the dynamically changing throughput characteristics of the channel, client and server, the streaming delivery needs to be adaptive in order to maintain a real-time playback experience for the user. The server should adapt the transmission rate to the varying throughput of the system. An example of such a rate adaptation system can be found in Haskell et al. (US Patent No. 5,565,924, "Encoder/Decoder Buffer Control for Variable Channel").

The streaming client provides receiver buffering for storing incoming data before passing them to the media decoder for playout. The receiver buffer is used to compensate for the difference between source encoding rate (also referred to as sampling rate) and transmission rate (pre-decoder buffering). It is also used to compensate for the packet transfer delay variation over the channel (jitter buffering). In general, these two functions are assumed to be combined in a single receiver buffer. However, they can also be implemented with two separate buffers in a receiver, although such an implementation is not optimum from a delay point of view. Receiver buffering can also smooth out the adaptation inaccuracies (i.e. if the system throughput is not matched exactly by the server output).

If the receiver buffer becomes empty (i.e. buffer underflow), which means that the decoder is running out of data to decode, the client needs to pause playout and re-buffer incoming data before resuming. On the other hand, if the incoming data rate is faster than the playout rate, then the receiver buffer space can be exhausted (i.e., buffer overflow), which can result in dropping packets from the buffer in order to make room for new incoming packets. When the packets are dropped, the video quality is degraded. To ensure a smooth and flawless playout, the receiver buffer of the client should be kept within a certain fullness range. In order to guarantee that the receiver buffer will not underflow or overflow, the bitrate for transmission and sampling at the server and that for reception and playout at the client must be adequately controlled.

3GPP rate adaptation signaling as defined in 3GPP TS 26.234 is based on feedback sent from the receiver to the sender in the form of an RTCP APP (Application-Defined Real Time Control Protocol) packet. This packet includes the sequence number (SN) of the oldest packet in the receiver buffer. This SN is referred to as OBSN (oldest buffered sequence number).

The signaling of the OBSN allows the sender to perform the necessary adaptation. Yet, if the decoding order and the display order are different, the sender may not be able to derive the status of the buffer and the purpose of the signaling would be defeated. With the PSS (Packet Switched Streaming Service) video codecs supported in Release 5, this is not a problem as their packet transmission order is equal to the decoding order.

In Release 6, H.264 (also known as MPEG-4 AVC) will be added to the list of the PSS codecs. With H.264, the transmission order and the decoding order could be different because of interleaved packetization at the payload level (as specified in the IETF H.264 RTP payload format draft).

The same property also exists for the frame-interleaved transmission of many audio and speech codecs, such as AMR-NB, AMR-WB, AMR-WB+, AAC and AACPlus (for the latter, the interleaving method defined in RFC 3640 is used).

The problem is hereafter illustrated assuming that the server transmits a series of packets whose RTP sequence numbers are denoted x, x+1, x+2, x+3, .... Let us further assume that each of these RTP packets carries two units. From the codec and the payload format in use, each of these units can be mapped to a decoding order y. The decoding order y is defined as follows: If a packet has a decoding order y, it is the $y^{th}$ packet to be decoded. That is, when the current packet has a decoding order y, it also means that (y-1) packets have already been decoded by the time the current packet is given to the decoder. For example, in the case of H.264, the DON (Decoding order number) defined by the H.264 RTP payload format can be used to derive the decoding order of the NAL units received in each packet

The following example illustrates the sequence of units where for each unit is given the sequence number of the packet to which it belongs, its unit number (i.e. whether it is the first or second unit in the packet) and its decoding order:

| SN | Unit number | Decoding order |
|---|---|---|
| x | 0 | y |
| x | 1 | y+1 |
| x+1 | 0 | y+2 |
| x+1 | 1 | y+3 |
| x+2 | 0 | y+4 |
| x+2 | 1 | y+5 |
| x+3 | 0 | y+6 |
| x+3 | 1 | y+7 |
| x+4 | 0 | y+100 |
| x+4 | 1 | y+8 |
| x+5 | 0 | y+9 |
| x+5 | 1 | y+10 |
| x+6 | 0 | y+11 |
| x+6 | 1 | y+12 |
| .... | .... | ... |
| x+49 | 0 | y+97 |
| x+49 | 1 | y+98 |
| x+50 | 0 | y+99 |
| x+50 | 1 | y+101 |
| x+51 | 0 | y+102 |
| x+51 | 1 | y+103 |

In the above-given example, the decoding order is increasing by 1 for each unit received from packets with SN from x to x+3. However, this rule is broken for packet x+4. The first unit of packet x+4, for example, belongs to a frame that will be decoded only in the future.

Furthermore, the DON (Decoding order number) defined by H.26L payload format maps the sequence numbers to a decoding order y. However, although the y value is derived from the DON value, these two values are not always the same.

Let us now look at the evolution of the receiver buffer and assume that, at a certain time, the receiver has received packets x, x+1, x+2, x+3. In this situation, the oldest sequence number in the buffer (OBSN) is x, and the highest received sequence number (HSN) signaled in RTCP RR reports is x+3. As time progresses, packet of SN x has been decoded and packet of SN x+4 has been received. Accordingly, the server will signal to the client OBSN=x+1 (the new "oldest" sequence number in the buffer) and HSN=x+4 (the new "most recent" SN received).

As time further progresses, the units of packets x+1, x+2 and x+3 have been played and x+5, x+6 and x+7 have been received, for example. At that point, the state of the buffer is x+4, x+5, x+6 and x+7. Accordingly, the client will signal to the server OBSN=x+4 and HSN=x+7. The problem arises around this time because after x+5, the decoding order number for the following packets: x+6, x+7, etc. is smaller than the decoding order number of the first unit of packet x+4. Accordingly, the current rate adaptation signaling OBSN will remain at x+4 until this unit is played and the packet x+50 is received, at which time the OBSN will be updated. The server will thus lose track of the receiver buffer status because OBSN is not updated according to the decoding and the removal of packets from the receiver buffer.

A further limitation stems from the fact that since multiple units can be sent in a single packet, when the receiver signals to the sender that the OBSN is x+2, for example, the sender cannot know determine whether the first unit of this packet is still in the buffer or whether only the second unit of the packet is in the buffer.

For AMR-NB and AMR-WB, RFC 3267 defines how interleaving can be used. For AMR-WB+, the same interleaving rules defined for AMR-WB apply. There are two relevant parameters signaled inside the payload headers: ILL and ILP. Moreover, the number of frames per AMR packet is fixed to a certain number (let's say N). These three values define a mathematically deterministic method for defining the order of frames to be present in an RTP payload present inside an AMR RTP packet

It can be seen that there is no notion of hard-coded DON in AMR as in H.26L, since each frame has a deterministic decoding order based on ILL, ILP and N values signaled in the RTP payload header. AMR-wise DON is interpreted by the client and server by making use of the first RTP Sequence number signaled in RTSP PLAY response and with (ILL, ILP, N) triplet. The same problem statement mentioned for the H.26L case is valid for interleaved streaming of AMR-NB, AMR-WB and AMR-WB+.

In sum, the prior art method of rate adaptation signaling is based on the oldest packet currently in the receiver playout buffer, allowing the sender to estimate both the number of bytes in the receiver buffer and the duration of the playout buffer. This information is used by the sender to perform adaptation so as to avoid receiver underflow (playout interruption) or receiver overflow (packet loss). However, because the decoding order and the transmission order are not the same in some occasions and that multiple units may be in the same packet, the sender may lose track of the receiver buffer.

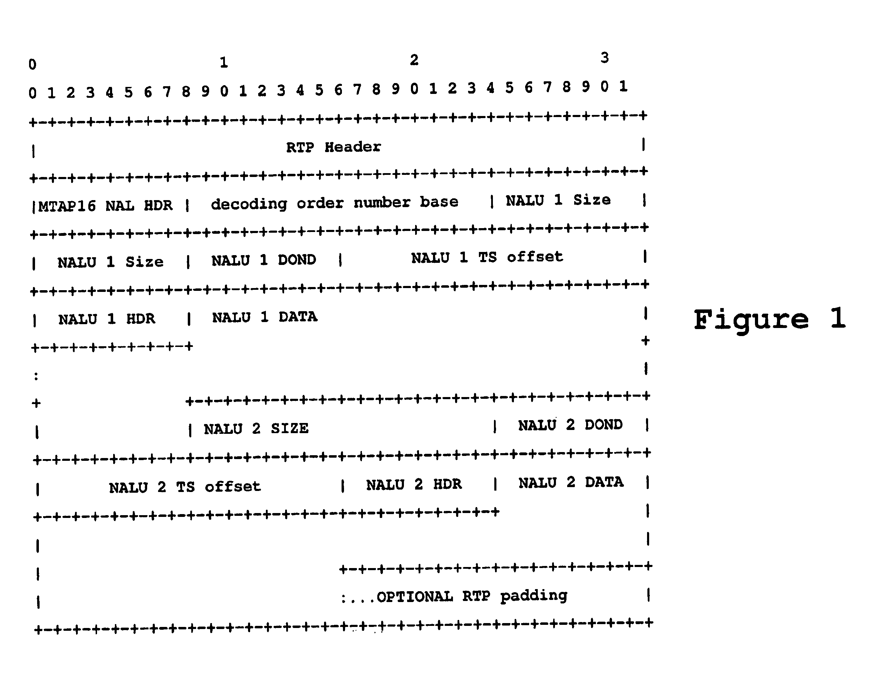

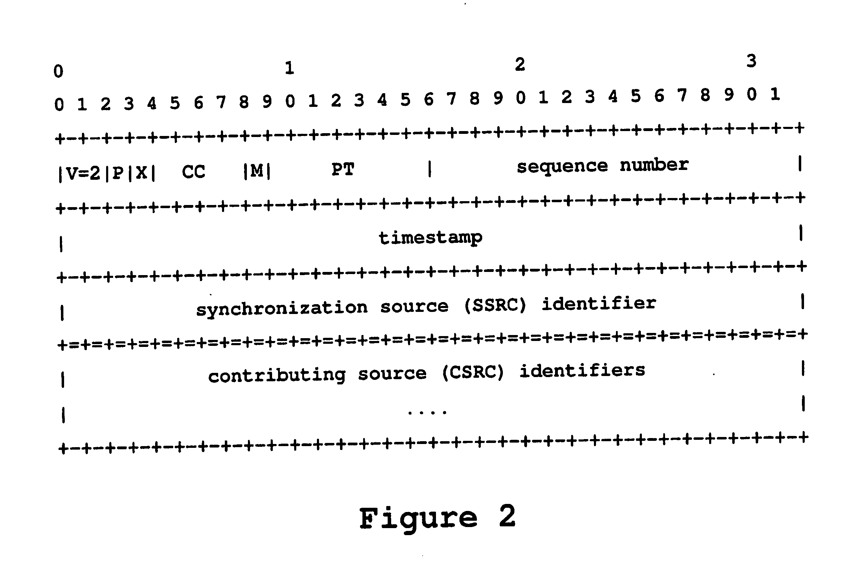

A typical RTP packet is shown in Figure 1. The RTP packet includes a multi-time aggregation packet of type MTAP16 and two multi-time aggregation units. The RTP Header in the first row of the packet is shown in Figure 2. As shown in Figure 2, the sequence number (SN) of the packet is shown in the first row of the RTP header. As shown in Figure 1, the aggregation type packet aggregates multiple Network Abstraction Layer (NAL) units into a single RTP payload. In particular, in MTAP16s, the NAL unit payload consists of a 16-bit unsigned decoding number order (DON) base, or DONB (see second row of the packet). DONB contains the value of DON of the first NAL unit, so that the value of DON of all other NALs can be expressed in DOND, or the difference between the value of DON in a certain NAL and DONB.

The RTP payload format for H.264 codec can be found in the IETF Audio Visual Transport Working Group Internet Draft draft-ietf-avt-rtp-h264-05 (April 2004).

WO 2004/008673 A2 describes a method of compensating for packet transfer variation by monitoring and controlling the distribution of the end-to-end delay for a given packet. In particutar, in a data streaming system having a streaming server and a streaming client, the server provides pre-decoding buffer parameters to the client, and the client provides information about its chosen buffering parameters to the server. Based on this information, the server is able to operate its rate-control and rate-shaping algorithm In order to reduce the occurrence of client buffer violation.

Summary of the Invention

There is described herein, a mechanism for the server device in a multimedia streaming network, which sends streaming data packets to a client device to playout, to reconstruct a list of data packets stored in the receiver buffer in the client device. Based on the reconstruction, the server device adjusts the streaming data amount provided to the client device, so as to control the level of the receiver buffer.

The first aspect provides a method fur controlling level of a receiver buffer in a client in a multimedia streaming network, the streaming network comprising a server for providing streaming data in a plurality of packets to the client, wherein at least some of the data packets are stored in the receiver buffer so as to compensate for difference between data transmission amount by the server and the data usage amount by the client, and wherein the packets are decoded in a decoding order based on a plurality of decoding order values associated with a playout order the client. The method comprises:

determining in the client the next packet to be decoded among the packets in the receiver buffer based on the decoding order values; and
signaling to the server information indicative of said next packet to be decoded, so as to allow the client to adjust the streaming data amount provided to the client based on the information.

According to the present disclosure, the packets are associated with a plurality of units including the next unit to be decoded, and wherein the next packet to be decoded is the packet to which the next unit to be decoded belongs. Each of the units has a unit number and each of the data packets has a sequence number known to both the client and the server, and the information signaled to the server is indicative of the unit number of said next unit to be decoded and the sequence number of the packet to which said next unit belongs.

According to the present disclosure, the server maintains a list of units that have been sent and a record of unit number and the sequence number of the packet to which the sent units belong and a mapping between said sequence number and unit number to the decoding order for determining the data units in the receiver buffer based on said mapping so as to adjust the streaming data amount provided to the client based on said determination in the server.

According to the present disclosure, the information signaled to the server is further indicative of a difference between a scheduled playout time of said next unit to be decoded and the decoding time of said next unit.

According to the present disclosure, the information signaled to the server is further indicative of the highest sequence number received by the client so as to allow the server to determine the data packets in the receiver buffer.

According to the present disclosure, each of the units has a timestamp and each of the data packets has a sequence number known to both the client and the server, and the information signaled to the server is indicative of the timestamp of said next unit to be decoded and the sequence number of the packet to which said next unit belongs.

The second aspect provides a multimedia streaming network comprising:

at least a client; and
a server for providing streaming data in a plurality of packets to the client,
wherein the client comprises:

a receiver buffer for storing at least some of the data packets to be decoded so as to compensate for difference between data transmission amount by the server and data usage amount by the client, and wherein the packets are decoded in a decoding order based on a plurality of decoding values associated with a playout order in the client, and
a mechanism for signaling to the server information indicative of the next packet to be decoded among the packets in the buffer based on the decoding order values so as to allow the server to adjust the rate of streaming data provided to the client.

According to the present disclosure, the packets are associated with a plurality of units including the next unit to be decoded, and wherein the next packet to be decoded is the packet to which the next unit to be decoded belongs. Each of the units has a unit number and each of the data packets has a sequence number known to both the client and the server, and the information signaled to the server is indicative of the unit number of said next unit to be decoded and the sequence number of the packet to which said next unit belongs.

According to the present disclosure, the server maintains a list of units that have been sent and a record of unit number and the sequence number of the packet to which the sent units belong and a mapping between said sequence number and unit number to the decoding order for determining the data units in the receiver buffer based on said mapping so as to adjust the streaming data amount provided to the client based on said determination in the server.

The third aspect provides a client device in a multimedia streaming network, the streaming network comprising a server device for providing streaming data in a plurality of packets to the client device, wherein the packets are decoded in a decoding order based on a plurality of decoding values associated with a playout order in the client device. The client device comprises:

a receiver buffer for storing at least some of the data packets to be decoded so as to compensate for difference between data transmission amount by the server device and the data usage amount in the client device; and
a mechanism for signaling to the server device information indicative of the next packet to be decoded among the packets in the receiver buffer based on the decoding order values so as to allow the server device to adjust the streaming data amount provided to the client device.

According to the present disclosure, the packets are associated with a plurality of units including the next unit to be decoded, and wherein the next packet to be decoded is the packet to which the next unit to be decoded belongs. Each of the units has a unit number and each of the data packets has a sequence number known to both the client device and the server device, and the information signaled to the server device is indicative of the unit number of said next unit to be decoded and the sequence number of the packet to which said next unit belongs.

According to the present disclosure, the client device further comprises a software program having executable codes for determining:

the decoding order of the data packets in the receiver buffer based or the decoder order values, and
the next packet to be decoded among the data packets in the receiver buffer based on the decoding order values.

The fourth aspect provides a server device for providing streaming data in a multimedia streaming network, the multimedia streaming network comprising at least a client device for receiving the streaming data in a plurality of data packets and decoding the data packets in a decoding order based on a plurality of decoding order values associated with a playout order, wherein the client device has a receiver buffer for storing at least some of the data packets so as to compensate for difference between data transmission amount by the server device and the data usage amount by the client device. The server device comprises:

a mechanism for receiving information from the client device indicative of the next packet to be decoded among the packets in the receiver buffer based on the decoding order values in the client device; and
a software program for determining the packets in the receiver buffer based on the information so as to adjust the streaming data amount provided to the client device for controlling level of the receiver buffer.

According to the present disclosure, the packets are associated with a plurality of units including the next unit to be decoded, and wherein the next packet to be decoded is the packet to which the next unit to be decoded belongs. Each of the units has a unit number and each of the data packets has a sequence number known to both the client device and the server device, and the information signaled to the server device is indicative of the unit number of said next unit to be decoded and the sequence number of the packet to which said next unit belongs.

The fifth aspect further provides a software product embedded in a computer readable media for use in a client device in a multimedia streaming network, the streaming network comprising a server device for providing streaming data in a plurality of packets to the client device, wherein the packets are decoded in a decoding order based on a plurality of decoding values associated with a playout order in the client device, and wherein the client device comprises a receiver buffer for storing at least some of the data packets to be decoded so as to compensate for difference between data transmission. The software product comprises:

a code for determining the decoding order of the data packets in the receiver buffer based on the decoding order values; and

a code for determining the next packet to be decoded among the data packets in the receiver buffer based on the decoding order values, so as to provide to the server device information indicative of said next packet to be decoded, allowing the server device to adjust the streaming data amount provided to the client device based on the information for controlling level of receiver buffer.

According to the present disclosure, the packets are associated with a plurality of units including the next unit to be decoded, and wherein the next packet to be decoded is the packet to which the next unit to be decoded belongs. Each of the units has a unit number and each of the data packets has a sequence number known to both the client device and the server device, and the information signaled to the server device is indicative of the unit number of said next unit to be decoded and the sequence number of the packet to which said next unit belongs.

The sixth aspect provides a software product embedded in a computer readable media for use in a server device providing streaming data in the multimedia streaming network, the multimedia network comprising at least a client device for receiving the streaming data in a plurality of data packets and decoding the data packets in a decoding order based on a plurality of decoding order values associated with a playout order, wherein the client device has a receiver buffer for storing at least some of the data packets so as to compensate for difference between the transmission amount by the server device and the data usage amount by the client device. The software product comprises:

a code for relating the decoding order to the sequence numbers of the data packets having been sent to the client device; and

a code for determining the data packets in the receiver buffer based on said relating and on information provided by the client device indicative of the next packet to be decoded in the client device, so as to allow the server device to adjust the streaming data amount provided to the client device for controlling level of the receiver buffer.

Brief Description of the Drawing

Figure 1 is a block diagram showing a typical RTP packet.
Figure 2 is a block diagram showing a typical RTP header.
Figure 3 is a block diagram showing a multimedia streaming system having a server device and a client device that can perform the rate adaptation method, according to the present invention.

Detailed Description of the Invention

The present invention provides a method of buffer level signaling so as to allow the server in a multimedia streaming network to perform rate adaptation in codecs such as H.264, for which packet transmission order is different from decoding order. The buffer level signaling method, according to the present invention, is based on information about the next unit to be decoded. The sequence number (SN) of the packet to which the next unit to be decoded belongs is herein referred to as NDSN.

In the method of buffer level signaling, according to the present invention, the receiver reports to the sender information of the next unit to be decoded. This unit is an identifiable decoding unit that can be defined in an RTP payload format. More particularly, the identifiable unit can be identified by the NDSN and the unit number (NDU) within the packet. In the case of an audio codec, the identifiable decoding unit is typically a frame. In the case of the H.264 codec, the identifiable decoding unit is a NAL (Network Abstraction Layer) unit. For example, if the next NAL unit to be passed to the decoder is the third NAL unit found in packet with SN=100, the receiver signals the values 100 and 2 to the sender.

The receiver reports to the sender information of the next unit to be decoded based on the smallest y value. Based on the received NDSN and the NDU, the server can identify the unit to be decoded next. As such, the sender can derive the correct status of the receiver buffer. Using the set of x and y values given in the background section, this implementation can be illustrated as follows:

When packets x+4, x+5, x+6 and x+7 have been received, the decoding orders of the units that were carried in these packets are y+100, y+8, y+9, y+10, y+11, y+12, y+13 and y+14. Thus, the second unit of packet x+4 has the smallest decoding order value of y+8. Accordingly, the next unit to be decoded can be signaled unambiguously to the sender through the SN of the packet to which it belongs (x+4) and the corresponding unit number (NDU=1). The receiver also sets HSN=x+7 as always because this is the latest received sequence number. The above-discussed situation is shown in TABLE I:

TABLE I

| Decoding Order value | Packets in receiver buffer | NDSN | HSN | NDU |
|---|---|---|---|---|
| ... | ... | ... | ... | . |
| ... | ... | ... | ... | . |
| ... | ... | ... | ... | . |
| y+5 | x+2,x+3,x+4 | x+2 | x+4 | 1 |
| y+6 | x+3, x+4, x+5 | x+3 | x+5 | 0 |
| y+7 | x+3, x+4, x+5 | x+3 | x+5 | 1 |
| y+8 | x+4, x+5, x+6 | x+4 | x+6 | 1 |
| y+9 | x+4, x+5, x+6 | x+5 | x+6 | 0 |
| y+10 | x+4, x+5, x+6, x+7 | x+5 | x+7 | 1 |
| y+11 | x+4, x+6, x+7, x+8 | x+6 | x+8 | 0 |
| ... | ... | ... | ... | . |
| ... | ... | ... | ... | . |
| ... | ... | ... | ... | . |

Note: when decoding order value = y+6, NDSN = x+3, and NDU = 0; when decoding order value = y+7, NDSN = x+3 and NDU = 1.

Note: Some data units of the packets in the receiver buffer may have been decoded and removed from the buffer. However, each packet in the buffer should have at least one data unit remaining in the buffer.

Based on the received NDSN and the NDU, the sender is able to get an accurate estimation of which packets are in the receiver buffer, and for each packet in the receiver buffer, which data units are in the receiver buffer.

At the receiver side:

- Compute the decoding order (y values) of the coded units that are currently in the buffer;
- Find the next unit to be decoded (unit with the smallest y value); and
- Signal the unit number of the next unit to be decoded (NDU) and the sequence number of the next packet to which this unit belongs (call this NDSN).

At the sender side:

- Keep a list of units (L) that have been sent. For each unit keep a record of the sequence number (SN) of the packet in which the unit was sent, its unit number indicating the order of the unit in the packet, and the mapping of the unit number and the sequence number to the decoding order number (i.e. its y value);
- Look up the NDU, NDSN and the HSN signalled by the receiver in RTCP RR or SR report;
- Reconstruct the list of units in the receiver buffer, by looking up in L all the units whose recorded information conforms to:

    1) the decoding number in the list is higher than the decoding order that maps to the signalled NDSN and NDU, and
    2) the sequence number is smaller than the highest sequence number received (HSN).

It should be noted that wrap around should be taken into consideration when comparing the decoding number and the sequence number. For example, since the RTP sequence number is represented using 16 bits in the signaling, the maximum value that has been signaled is 65535. Then the next value of 0 actually represents a sequence number of 65536.

Alternatively, a special value may also be used for the NDU field (e.g. 0xFFFF if the field is two bytes) in order to signal that no unit information is provided. In this case, only the sequence number of the packet the unit belongs to is supplied. The server will not be able to estimate as accurately which units are currently in the receiver buffer.

Several other implementations are described below:

IMPLEMENTATION I

The receiver reports to the sender information of the next packet to be decoded based on the smallest y value. Based on the received NDSN, the server can identify the packet to be decoded next. As such, the sender can derive the correct status of the receiver buffer. Using the set of x and y values given in the background section, this implementation can be illustrated as follows:

When packets x+4, x+5, x+6 and x+7 have been received, their corresponding decoding order is y+100, y+101, y+4 and y+5. Thus, x+6 has the smallest decoding order value of y+4. Accordingly, the next packet to be decoded and the corresponding NDSN is x+6. The receiver also sets HSN=x+7 as always because this is the latest received sequence number. The above-discussed situation is shown in TABLE II:

TABLE II

| Decoding Order value | Packets in receiver buffer | NDSN | HSN | Smallest SN not decoded |
|---|---|---|---|---|
| . | . | . | . | . |
| . | . | . | . | . |
| . | . | . | . | . |
| y+2 | x+2, x+3, x+4, x+5 | x+2 | x+5 | x+2 |
| y+3 | x+3, x+4, x+5, x+6 | x+3 | x+6 | x+3 |
| y+4 | x+4, x+5, x+6, x+7 | x+6 | x+7 | x+4 |
| y+5 | x+4, x+5, x+7, x+8 | x+7 | x+8 | x+4 |
| . | . | . | . | . |
| . | . | . | . | . |

Note: when decoding order value = y+3, NDON = the DON of the NAL unit carried by packet x+3; when decoding order value = y+4, NDON = the DON of the NAL unit carried by packet x+6.

Based on the received NDSN, the sender is able to get an accurate estimation of which packets are in the receiver buffer because it can map locally the sequence numbers to their decoding orders - the sender keeps a list of the sequence numbers and the way these sequence numbers are mapped to the decoding order. In this example, the sender knows that x+4 has a decoding order higher than x+7. It can conclude that x+4 is in the buffer and thus determine what other packets are currently in the buffer.

Additionally, the sender can get a more accurate measurement of the receiver buffer duration through the signaling of an optional playout delay parameter. The playout delay is defined as the difference between the scheduled playout time of the next packet to decode and the decoding time of this packet (i.e. the packet of sequence number NDSN).

IMPLEMENTATION I can thus be summed up as follows:

At the receiver side:

- Compute the decoding order (y values) of the packets that are currently in the buffer;
- Find the next packet to be decoded (packet with the smallest y value); and
- Signal the sequence number of the next packet to be decoded (call this NDSN).

At the sender side:

- Keep a list of packet sequence numbers (L) that have been sent, and the mapping from the sequence numbers to a decoding order;
- Look up the NDSN and the HSN signalled by the receiver in RTCP RR or SR report;
- Reconstruct the list of packets in the receiver buffer, by looking up in L all the packets whose sequence number satisfies: 1) the decoding order associated with the sequence number in the list is higher than the decoding order that maps to the NDSN sequence number and 2) the sequence number is smaller than the highest sequence number received (HSN).

IMPLEMENTATION II

With IMPLEMENTATION I, there can still be ambiguity if MTAPs (Multi-Time Aggregation Packets, as defined in the H.264 payload format) are used. An aggregation packet type is used to aggregate multiple NAL (Network Abstraction Layer) units into a single RTP payoad. All NAL units consist of a single NAL unit type octet, which also co-serves as the payload header of this RTP payload format. In MTAPs, the NAL unit payload consists of a 16-bit unsigned decoding number order base (DONB) and one or more multi-time aggregation units. DONB must contain the value of DON for the first NAL unit in the NAL unit decoding order among the NAL units of the MTAP. The problem arises from the fact that NALs from different frames can be included in the same RTP packet and thus have the same SN. Subsequently, when an NDSN is reported, it is not known which of the packet NALs will be decoded next. If the possible sampling time differences between different NALs belonging to the same packet is limited, IMPLEMENTATION I could lead to some inaccuracies in the buffer estimation. When the sender packetization is such that there can be high differences between the sampling times of NALs in the same packet, then estimation according to IMPLEMENTATION I may fail altogether.
In IMPLEMENTATION II, this ambiguity is solved by sending the DON of the next NAL to decode (NDON) instead of the sequence number
**[0059]**    The same sender and receiver algorithms as those described in IMPLEMENTATION I can be used. The difference between IMPLEMENTATION II and IMPLEMENTATION I is that NDON is signalled instead of NDSN (see the note below TABLE II). Thus, IMPLEMENTATION II can be summed up as follows:

At the receiver side:

- Compute the decoding order (y values) of the NALs that are currently in the buffer;
- Find the next packet to be decoded (packet with the smallest y value); and
- Signal the DON of the next packet to be decoded (call this NDON)

At the sender side:

- Keep a list (L) of NALs that have been sent. For each NAL, keep a record of the sequence number (SN) of the packet in which the NAL was sent, its DON value and the mapping from NALs to a decoding order;
- Look up the NDON and the HSN signalled by the receiver; and
- Reconstruct the list of NALs in the receiver buffer, by looking up in L all the NALs whose recorded information conforms to: 1) the decoding order associated with the NAL in L is higher than the decoding order that maps to the signalled NDON and 2) the sequence number is smaller than the highest sequence number received (HSN).

For AMR (-NB, -WB and -WB+), the calculation of DON is done as follows: Assumptions:

- ILL=L for the interleave group that starts at speech frame-block "n".
- The first payload packet of the interleave group is "s", with n RTP sequence number as "SN"
- The number of speech frame-blocks carried in each payload is N
- The Sequence Number of the first AMR audio packet is "SN0"

AMR Payload s (the first packet of this interleave group):

$$ILL=L, ILP=0,$$

$$\text{Carry frame-blocks: } n, n+(L+1), n+2*(L+1), ..., n+(N-1)*(L+1)$$

Payload s+1 (the second packet of this interleave group):

$$ILL=L, ILP=1,$$

$$\text{frame-blocks: } n+1, n+1+(L+1), n+1+2*(L+1), ..., n+1+(N-1)*(L+1)$$

....

Payload s+L (the last packet of this interleave group):

$$ILL=L, ILP=L,$$

$$\text{frame-blocks: } n+L, n+L+(L+1), n+L+2*(L+1), ..., n+L+(N-1)*(L+1)$$

The next interleave group will start at frame-block n+N*(L+1).

In an interleave group that starts at speech-frame block n, the decoding order of the $i^{th}$ AMR frame in the AMR payload with ILP=I is:

$$DON(i) = (n+j) + i*(L+1)$$

where

i = 0, ..., N -1 and is an integer

$j=_0$, ..., L and is an integer

n can be calculated based on the ILL, N, initial and current AMR payload's sequence numbers as follows:

$$n= (Floor[(SN-SN0)/(L+1)]) * N*(L+1) \quad \text{and } n \text{ is an integer.}$$

For the first AMR packet received, the DON of the first AMR frame is zero. As both the server and the client are aware of the first RTP sequence number (server by sending it, client by checking the RTSP PLAY response and the RTP-Info header's "seqnum" field), it is straightforward to make such a labelling. Then, DON of each AMR frame can be calculated by using ILL, ILP and N.

IMPLEMENTATION III

As defined in H.264 codecs, when signaling the value of DON in an MTAP, the DON value of the first NAL unit in transmission order may be set to any value. Values of DON are in the range of 0 to 65535, inclusive. After reaching the maximum value, the value of DON wraps around to 0. Thus, with IMPLEMENTATION II, the DON may wrap around, which would create ambiguities at the server. This is because the DON field has fewer bits than the SN field and the DON can be sparse (a sender could for some reason use a high DON increment between consecutive NALs).

In IMPLEMENTATION III, the receiver uniquely identifies the next NAL by the packet SN in which it is carried and the DON value. Thus, the receiver signals to the server the sequence number of the packet carrying the next NAL unit and the DON number indicative of the decoding order of that next NAL unit. If there is no other NAL in the packet, the DON need not be sent.

IMPLEMENTATION III can be summed up as follows:

At the receiver side:

- Compute the decoding order (y values) of the NALs that are currently in the buffer;
- Find the next packet to be decoded (packet with the smallest y value); and
- Signal the DON of the next packet to be decoded (call this NDON) and the sequence number of the next packet to be decoded (call this NDSN).

At the sender side:

- Keep a list (L) of NALs that have been sent. For each NAL, keep a record of the sequence number (SN) of the packet in which the NAL was sent, its DON value and the mapping from the NALs to a decoding order;
- Look up the NDON, the NDSN and the HSN signalled by the receiver; and
- Reconstruct the list of NALs in the receiver buffer, by looking up in L all the NALs whose recorded information conforms to: 1) the decoding order associated in the NAL in L is higher than the decoding order that maps to the signalled NDON and the signal NDSN and 2) the sequence number is smaller than the highest sequence number received (HSN).

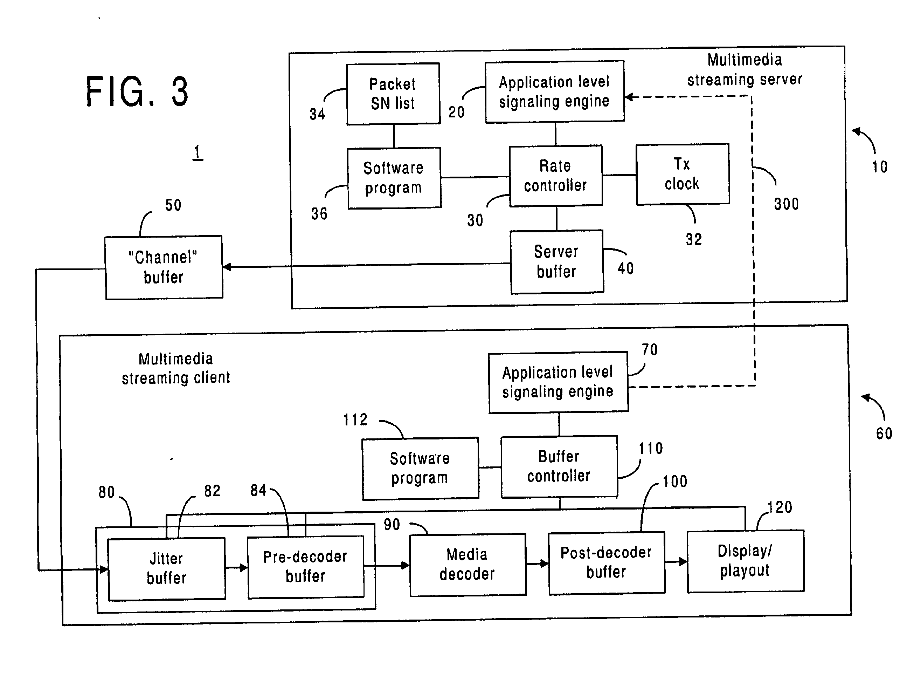

In order to illustrate how the method of buffer level signaling for rate adaptation is carried out, a multimedia streaming system is shown in Figure 3. As shown, the multimedia streaming system **1** has means for buffer level signaling from a streaming client **60** to a streaming server **10**.

The streaming server **10** comprises an application level signaling engine **20,** a rate controller **30** and a server buffer **40**. The streaming client **60** comprises an application level signaling engine **70,** corresponding to, and adapted to communicate with, the application level signaling engine **20** in the streaming server **10**. It further comprises a client buffer **80** which, in the embodiment of the invention illustrated in Figure 3, comprises a jitter buffer **82** and a pre-decoding buffer **84,** integrated as a single unit. In other embodiments of the invention, streaming client **60** may include a jitter buffer and a pre-decoding buffer that are implemented separately. The streaming client further comprises a media decoder **90,** a post-decoder buffer **100,** a buffer controller **110** and a display / play-out device **120**.

The system depicted in Figure 3 is further shown to comprise a "channel buffer" **50** located between streaming server **10** and streaming client **60,** representing the varying transfer delays that occur during transmission of data packets from the streaming server to the client.

The server's rate controller **30** is operative to adapt the rate at which media data is transmitted from the streaming server. The server also has a transmission clock **32** to timestamp the packets to be transmitted to the client. It operates by adjusting the transmitted data rate in accordance with the varying bit-rates on the transmission channel, taking into account the client's request for a transmission time-shift, thereby seeking to avoid pauses in play-back at the client due to pre-decoder buffer underflow or dropping packets at the client due to buffer overflow.

Server buffer **40** stores data packets temporarily before they are transmitted from the streaming server across the transmission channel to streaming client **60**. In a "live"streaming scenario where data packets are sampled real-time, the server buffer is indeed a physical buffer where data packets are placed at sampling time and are extracted at transmission time. In a "pre-encoded" streaming scenario, where data packets are not sampled real-time but are stored in a pre-encoded file and are read from the file at transmission time, the server buffer is a virtual buffer that represents the difference between sampling time (with reference to a sampling clock started at the streaming server when the first data packet of the pre-encoded file is transmitted) and transmission time of data packets.

At the streaming client, media data is received from the transmission channel and buffered in client buffer **80**. The parameters of pre-decoder buffer **84** and jitter buffer **82** are set by the buffer controller **110**. The parameters are chosen as an aggregate of the server recommended pre-decoder buffering parameters and the additional buffering required as estimated by the client. The client estimates what is needed to tolerate the expected packet transfer delay variation (i.e. jitter) on the available transmission channel. Such aggregate is constrained by the maximum buffering capabilities of the client. Media decoder **90** extracts media data from the client buffer and decodes the media data in a manner appropriate for media type in question. It should be appreciated that the media data will, in general, comprise a number of different media types. For example, if the media data transmitted from the server is representative of a video sequence, it is likely to comprise at least an audio component in addition to video data. It should therefore be understood that media decoder **90,** as illustrated in Figure 3, may actually comprise more than one decoder, for example a video decoder implemented according to a particular video coding standard and an associated audio decoder. As the media data is decoded by media decoder **90,** it is output to post-decoder buffer **100** where it is stored temporarily until its scheduled play-out time, at which point it is passed from the post-decoder buffer to display / play-out device **120** under the control of buffer controller **110**.

According to the present invention, buffer controller **110** is adapted to provide to the application level signaling engine **70** an indication of the next unit to be decoded. The application level signaling engine is, in turn, adapted to transmit to the streaming server information about the next unit to be decoded, as denoted by reference numeral **300** in Figure 3. The transmitted information indicates the unit number of the next unit to be decoded (referred to as NDU) and the sequence number of the packet to which this unit belongs (referred as to NDSN). In the case of an H.264 payload, the unit is a NAL. As 30 shown in Figure 3, the streaming client **60** has a software program **112** including codes for computing the decoding order (y values) of the coded units that currently exist in the buffer **80** and determining the next unit to be decoded based on the smallest y value. Based on this finding, the application level signaling engine **70** can signal the unit number of the next unit and the sequence number of the packet to which this next unit belongs to the streaming server **10**.

In order to carry out the Implementation I, II and III, the buffer controller **110** is adapted to provide to the application level signaling engine **70** an indication of the next packet to be decoded. The application level signaling engine is, in turn, adapted to transmit to the streaming server information about the next packet to be decoded, as denoted by reference numeral **300 in** Figure 3. The transmitted information may indicate the sequence number of the packet to be decoded next. In the case of an H.264 payload, the transmitted information indicates the DON of the next NAL. Alternatively, the sequence number of the package that carries the next NAL and DON of that next NAL is signaled to the server. As shown in Figure 1, the streaming client **60** has a software program **112** including codes for computing the decoding order (y values) of the packets that currently exist in the buffer **80** and determining the next packet to be decoded based on the smallest y value. Based on this finding, the application level signaling engine **70** can signal the sequence number of the next package to be decoded to the streaming server 10.

At the server **10,** a software program **36** is used to determine the list of units or the list of packets in the receiver buffer from the unit SN list **34** and the information provided by the client **60**.

It should be noted that, in the embodiments described above, the receiver signals the SN of the packet to which the next unit to be decoded belongs and the unit number. Alternatively, the receiver may signal a timestamp of the next unit to be decoded instead of its unit number. As long as each unit, in the same packet has a different timestamp, the sender is able to identify unambiguously this unit from the signaled timestamp and sequence number. However, it is possible that some units have the same timestamp in the same packet. In that case, the signaling will not allow the sender to derive the status of the receiver buffer status as accurately as the signaling of a unit number, with the maximum estimation error being the data amount of a frame.

Furthermore, in addition to the interleaved payload format, H.26L also decouples the decoding order and output order. In other words, the decoding order of pictures may not be the same as their output order. In previous coding standards, decoding and output order were allowed to be different only with so-called B frames, for which two reference frames for inter prediction were used, the previous frame and the following frame in output order (i.e., the two previous frames in decoding order). B frames were not used in any profiles of Release 5 codecs. In H.26L the decoding order and output order may differ for any frame. These also have an impact on estimating the buffer. Nevertheless, the present invention is applicable to decoding involving B-frames and, more generally, to the situation when the prediction path is going backwards. In those situations, any time a frame is predicted from a future frame (in the sampling domain), the receiver buffer duration will be less than what would be derived from the OBSN and playout delay signaling.

As for AAC, AAC+ and other mpeg-4 audio streams transmitted using RFC 3640, AU-Index and AU-Index-Delta parameters define a unique index number for each of the audio access units or fragments. The DON is simply equal to this index. Thus, IMPLEMENATION II of the present invention is also applicable to these audio streaming schemes transmitted using RFC 3640.

Although the invention has been described with respect to one or more embodiments thereof, it will be understood by those skilled in the art that the foregoing and various other changes, omissions and deviations in the form and detail thereof may be made without departing from the scope of this invention.

**Claims**

1.   A method for controlling the level of a receiver buffer (80) in a client device (60) of a multimedia streaming network (1), the streaming network (1) comprising a server device (10) for providing streaming data in a plurality of data packets to a client device (60), and a client device (60) for decoding the data packets in a decoding order based on a plurality of decoding order values associated with a playout order, the client device (60) comprising a receiver buffer (80) for storing at least some of the data packets to compensate for a difference between the data transmission amount by the server device (10) and the data usage amount by the client device (60), said method comprising:

keeping, by the server device (10), a record indicative of the data packets sent to the client device (60) and the decoding order associated with said data packets;
determining, by the client device (60), the next packet to be decoded among the packets in the receiver buffer (80) based on the decoding order values;
signalling, by the client device to the server device (10), information (300) indicative of said next packet to be decoded; and
reconstructing, by the server device (10), a list of the data packets in the receiver buffer (80) using the information (300) signalled to the server device (10) and the record to allow the server device (10) to adjust the streaming data amount provided to the client device (60).

2.   The method of claim 1, wherein the packets are associated with a plurality of units including the next unit to be decoded, and wherein the next packet to be decoded is the packet to which the next unit to be decoded belongs.

3.   The method of claim 2, wherein each of the data packets has a sequence number known to both the client device (60) and the server device (10), and wherein the information (300) signalled to the server device (10) is indicative of the sequence number of next packet to be decoded.

4.   The method of claim 2, wherein each of the units has a unit number and each of the data packets has a sequence number known to both the client device (60) and the server device (10), and wherein the information (300) signalled to the server device (10) is indicative of the unit number of said next unit to be decoded and the sequence number of the packet to which said next unit belongs.

5.   The method of claim 4, wherein the server device (10) maintains a list of units that have been sent and a record of unit number and the sequence number of the packet to which the sent units belong and a mapping between said sequence number and unit number to the decoding order for determining the data units in the receiver buffer (80) based on said mapping so as to adjust the streaming data amount provided to the client device (60) based on said determination in the server device (10).

6. The method of claim 4, wherein the information (300) signalled to the server device (10) is further indicative of a difference between a scheduled playout time of said next unit to be decoded and the decoding time of said next unit.

7. The method of claim 3, wherein the server device (10) maintains a list of packet sequence numbers that have been sent and a mapping between said sequence numbers and the decoding order for determining the data packets in the receiver buffer (80) based on said mapping so as to adjust the streaming data amount provided to the client device (60) based on said determination in the server device (10).

8. The method of claim 3, wherein the information (300) signalled to the server device (10) is further indicative of a difference between a scheduled playout time of said next packet to be decoded and the decoding time of said next packet.

9. The method of claim 6 or 7, wherein the information (300) signalled to the server device (10) is further indicative of the highest sequence number received by the client device (60) so as to allow the server device (10) to determine the data packets in the receiver buffer (80).

10. The method of claim 2, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

11. The method of claim 1, wherein the data packets carry a plurality of network abstraction layer (NAL) units, each NAL unit having a decoding order and a decoding order number (DON) indicative of a NAL unit decoding order in a payload structure for transmission, and wherein the information (300) signalled to the server device (10) is indicative of the DON associated with said next NAL to be decoded.

12. The method of claim 11, wherein the server device (10) maintains a list of NAL units that have been sent and a mapping between said NAL units and the decoding order for determining the data packets in the receiver buffer (80) based on said mapping so as to adjust the streaming data amount provided to the client device (60) based on said determination in the server device (10).

13. The method of claim 1, wherein the data packets carry a plurality of network abstraction layer (NAL) units, each NAL unit having a decoding order, and a decoding order number (DON) indicative of a NAL unit decoding order in a payload structure for transmission, and wherein the information (300) signalled to the server device (10) is indicative of the sequence number of the data packet that carries the next NAL to be decoded and the DON associated with the decoding order of said next NAL.

14. A multimedia streaming network (1) comprising a server device (10) for providing streaming data in a plurality of data packets to a client device (60), and a client device (60) for decoding the data packets in a decoding order based on a plurality of decoding order values associated with a playout order, the server device (10) configured to keep a record indicative of the data packets sent to the client device (60) and the decoding order associated with said data packets, wherein the client device (60) comprises:

a receiver buffer (80) for storing at least some of the data packets to compensate for a difference between the data transmission amount by the server device (10) and the data usage amount by the client device (60),
a software program (112) having executable code for determining the next packet to be decoded among the data packets in the receiver buffer (80) based on the decoding order values, and
a mechanism (70) for signalling to the server device (10) information (300) indicative of the next packet to be decoded among the packets in the receiver buffer (80) based on the decoding order values so as to allow the server device (10) to reconstruct a list of data packets in the receiver buffer (80) using the information (300) and the record to adjust the rate of streaming data provided to the client device (60).

15. The streaming network (1) of claim 14, wherein the packets are associated with a plurality of units including the next unit to be decoded, and wherein the next packet to be decoded is the packet to which the next unit to be decoded belongs.

16. The streaming network (1) of claim 14, wherein each of the data packets has a sequence number known to both the client device (60) and the server device (10), and wherein the information (300) signalled to the server device (10) is indicative of the sequence number of next packet to be decoded.

17. The streaming network (1) of claim 15, wherein each of the units has a unit number and each of the data packets has a sequence number known to both the client device (60) and the server device (10), and wherein the information (300) signalled to the server device (10) is indicative of the unit number of said next unit to be decoded and the sequence number of the packet to which said next unit belongs.

18. The streaming network (1) of claim 17, wherein the server device (10) maintains a list of units that have been sent and a record of unit number and the sequence number of the packet to which the sent unit belong and a mapping between said sequence number and unit number to the decoding order for determining the data units in the receiver buffer (80) based on said mapping so as to adjust the streaming data amount provided to the client device (60) based on said determination in the server device (10).

19. The streaming network (1) of claim 17, wherein the information (300) signalled to the server device (10) is further indicative of a difference between a scheduled playout time of said next unit to be decoded and the decoding time of said next unit.

20. The streaming network (1) of claim 17, wherein the information (300) signalled to the server device (10) is further indicative of the highest sequence number received by the client device (60) so as to allow the server device (10) to determine the data packets in the receiver buffer (80).

21. The streaming network (1) of claim 15, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

22. The streaming network (1) of claim 16, wherein the server device (10) maintains a list of packet sequence numbers that have been sent and a mapping between said sequence numbers and the decoding order for determining the data packets in the receiver buffer (80) based on said mapping so as to adjust the streaming data amount provided to the client device (60) based on said determination in the server device (10).

23. The streaming network (1) of claim 16, wherein the information (300) signalled to the server device (10) is further indicative of a difference between a scheduled playout time of said next packet to be decode and the decoding time of said next packet.

24. The streaming network (1) of claim 22, wherein the information (300) signalled to the server device (10) is further indicative of the highest sequence number received by the client device (60) so as to allow the server device (10) to determine the data packets in the receiver buffer (80).

25. The streaming network (1) of claim 14, wherein the data packets carry a plurality of network abstraction layer (NAL) units, each NAL unit having a decoding order and a decoding order number (DON) indicative of a NAL unit decoding order in a payload structure for transmission, and wherein the information (300) signalled to the server device (10) is indicative of the DON associated with said next NAL to be decoded.

26. The streaming network (1) of claim 25, wherein the server device (10) maintains a list of NAL units that have been sent and a mapping between said NAL units and the decoding order for determining the data packets in the receiver buffer (80) based on said mapping so as to adjust the streaming data amount provided to the client device (60) based on said determination in the server device (10).

27. The streaming network (1) of claim 24, wherein the data packets carry a plurality of network abstraction layer (NAL) units, each NAL unit having a decoding order, and a decoding order number (DON) indicative of a NAL unit decoding order in a payload structure for transmission, and wherein the information (300) signalled to the server device (10) is indicative of the sequence number of the data packet that carries the next NAL to be decoded and the DON associated with the decoding order of said next NAL.

28. A client device (60) for a multimedia streaming network (1), the streaming network (1) comprising the client device (60) and a server device (10) for providing streaming data in a plurality of packets to the client device (60), the server device (10) configured to keep a record indicative of the data packets sent to the client device (60) and the decoding order associated with said data packets, the client device (60) configured to decode the data packets in a decoding order based on a plurality of decoding order values associated with a playout order, wherein the client device (60) comprises:

a receiver buffer (80) for storing at least some of the data packets to compensate for a difference between the data transmission amount by the server device (10) and the data usage amount in the client device (60);
a software program (112) having executable code for determining the next packet to be decoded among the data packets in the receiver buffer (80) based on the decoding order values, and
a mechanism (70) for signalling to the server device (10) information (300) indicative of the next packet to be decoded among the packets in the receiver buffer (80) based on the decoding order values so as to allow the server device (10) to reconstruct a list of data packets in the receiver buffer (80) using the information (300) signalled to the server device (10) and the record to adjust the streaming data amount provided to the client device (60).

29. The client device (60) of claim 28, wherein the packets are associated with a plurality of units including the next unit to be decoded, and wherein the next packet to be decoded is the packet to which the next unit to be decoded belongs.

30. The client device (60) of claim 29, wherein each of the units has a unit number and each of the data packets has a sequence number known to both the client device (60) and the server device (10), and wherein the information (300) signalled to the server device (10) is indicative of the unit number of said next unit to be decoded and the sequence number of the packet to which said next unit belongs.

31. The client device (60) of claim 29, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

32. The client device (60) of claim 28, wherein the software program (112) has executable code for determining the decoding order of the data packets in the receiver buffer (80) based on the decoder order values.

33. The client device (60) of claim 28, wherein each of the data packets has a sequence number known to both the client device (60) and the server device (10), and wherein the information (300) signalled to the server device (10) is indicative of the sequence number of said next packet to be decoded.

34. The client device (60) of claim 28, wherein the data packets carry a plurality of network abstraction layer (NAL) units, each NAL unit having a decoding order and a decoding order number (DON) indicative of a NAL unit decoding order in a payload structure for transmission, and wherein the information (300) signalled to the server device (10) is indicative of the DON associated with said next NAL to be decoded.

35. The client device (60) of claim 28, wherein the data packets carry a plurality of network abstraction layer (NAL) units, each NAL unit having a decoding order, and a decoding order number (DON) indicative of a NAL unit decoding order in a payload structure for transmission, and wherein the information (300) signalled to the server device (10) is indicative of the sequence number of the data packet that carries the next NAL to be decoded and the DON associated with the decoding order of said next NAL.

36. A server device (10) for a multimedia streaming network (1), the streaming network (1) comprising the server device (10) and a client device (60) for receiving streaming data in a plurality of data packets from the server device (10), the server device (10) configured to keep a record indicative of the data packets sent to the client device (60) and the decoding order associated with said data packets, the client device (60) configured to decode the data packets in a decoding order based on a plurality of decoding order values associated with a playout order, the client device (60) comprising a receiver buffer (80) for storing at least some of the data packets to compensate for a difference between the data transmission amount by the server device (10) and the data usage amount by the client device (60), wherein the server device (10) comprises:

a mechanism (20) for receiving information (300) from the client device (60) indicative of the next packet to be decoded among the packets in the receiver buffer (80) based on the decoding order values in the client device (60); and

a software program (36) for reconstructing a list of data packets in the receiver buffer (80) using the information (300) from the client device (60) and the record to adjust the streaming data amount provided to the client device (60).

37. The server device (10) of claim 36, wherein the packets are associated with a plurality of units including the next unit to be decoded, and wherein the next packet to be decoded is the packet to which the next unit to be decoded belongs.

38. The server device (10) of claim 37, wherein each of the units has a unit number and each of the data packets has a sequence number known to both the client device (60) and the server device (10), and wherein the information (300) signalled to the server device (10) is indicative of the unit number of said next unit to be decoded and the sequence number of the packet to which said next unit belongs.

39. The server device (10) of claim 37, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

40. The server device (10) of claim 36, wherein each of the data packets has a sequence number known to both the client device (60) and the server device (10), and wherein the information (300) received from the client device (60) is indicative of the sequence number of said next packet to be decoded.

41. The server device (10) of claim 36, wherein the data packets carry a plurality of network abstraction layer (NAL) units, each NAL unit having a decoding order and a decoding order number (DON) indicative of a NAL unit decoding order in a payload structure for transmission, and wherein the information (300) received from the client device (60) is indicative of the DON associated with said next NAL to be decoded.

42. The server device (10) of claim 36, wherein the data packets carry a plurality of network abstraction layer (NAL) units, each NAL unit having a decoding order, and a decoding order number (DON) indicative of a NAL unit decoding order in a payload structure for transmission, and wherein the information (300) received from the client device (60) is indicative of the sequence number of the data packet that carries the next NAL to be decoded and the DON associated with the decoding order of said next NAL.

43. A software product (112) embedded in a computer readable media for use in a client device (60) of a multimedia streaming network (1), the streaming network (1) comprising the client device (60) and a server device (10) for providing streaming data in a plurality of packets to the client device (60), the server device (10) configured to keep a record indicative of the data packets sent to the client device (60) and the decoding order associated with said data packets, the client device (60) configured to decode the data packets in a decoding order based on a plurality of decoding order values associated with a playout order, the client device (60) comprising a receiver buffer (80) for storing at least some of the data packets to compensate for a difference between the data transmission amount by the server device (10) and the data usage amount by the client device (60), wherein the software product (112) comprises:

code for determining the next packet to be decoded among the data packets in the receiver buffer (80) based on the decoding order values, so as to provide to the server device (10) information (300) indicative of said next packet to be decoded, the information (300) allowing the server device (10) to reconstruct a list of data packets in the receiver buffer (80) using the information (300) and the record to adjust the streaming data amount provided to the client device (60).

44. The software product (112) of claim 43, wherein the packets are associated with a plurality of units including the next unit to be decoded, and wherein the next packet to be decoded is the packet to which the next unit to be decoded belongs.

45. The software product (112) of claim 44, wherein each of the units has a unit number and each of the data packets has a sequence number known to both the client device (60) and the server device (10), and wherein the information (300) signalled to the server device is indicative of the unit number of said next unit to be decoded and the sequence number of the packet to which said next unit belongs.

46. The software product (112) of claim 44, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

47. The software product (112) of claim 43, wherein each of the data packets has a sequence number known to both the client device (60) and the server device (10), and wherein the information (300) provided to the server device (10) is indicative of the sequence number of said next packet to be decoded.

48. The software product (112) of claim 43, wherein the data packets carry a plurality of network abstraction layer (NAL) units, each NAL unit having a decoding order and a decoding order number (DON) indicative of a NAL unit decoding order in a payload structure for transmission, and wherein the information (300) provided to the server device (10) is indicative of the DON associated with said next NAL to be decoded.

49. The software product (112) of claim 43, wherein the data packets carry a plurality of network abstraction layer (NAL) units, each NAL unit having a decoding order, and a decoding order number (DON) indicative of a NAL unit decoding order in a payload structure for transmission, and wherein the information (300) provided to the server device (10) is indicative of the sequence number of the data packet that carries the next NAL to be decoded and the DON associated with the decoding order of said next NAL.

50. A software product (36) embedded in a computer readable media for use in a server device (10) of a multimedia streaming network (1), the streaming network (1) comprising the server device (10) and a client device (60) for receiving streaming data in a plurality of data packets from the server device (10), the server device (10) configured to keep a record indicative of the data packets sent to the client device (60) and the decoding order associated with said data packets, the client device (60) configured to decode the data packets in a decoding order based on a plurality of decoding order values associated with a playout order, the client device (60) comprising a receiver buffer (80) for storing at least some of the data packets to compensate for a difference between the data transmission amount by the server device (10) and the data usage amount by the client device (60), wherein the software product (36) comprises:

code for reconstructing a list of data packets in the receiver buffer (80) using the record and information (300) received from the client device (60) indicative of the next packet to be decoded in the client device to allow the server device (10) to adjust the streaming data amount provided to the client device (60).

51. The software product (36) of claim 50, wherein the packets are associated with a plurality of units including the next unit to be decoded, and wherein the next packet to be decoded is the packet to which the next unit to be decoded belongs.

52. The software product (36) of claim 50, wherein each of the units has a unit number and each of the data packets has a sequence number known to both the client device (60) and the server device (10), and wherein the information (300) signalled to the server device (10) is indicative of the unit number of said next unit to be decoded and the sequence number of the packet to which said next unit belongs.

53. The software product (36) of claim 50, wherein each of the units has a timestamp and each of the data packets has a sequence number known to both the client device (60) and the server device (10), and wherein the information (300) signalled to the server device (10) is indicative of the timestamp of said next unit to be decoded and the sequence number of the packet to which said next unit belongs.

54. The software product (36) of claim 50, wherein each of the data packets has a sequence number known to both the client device (60) and the server device (10), and wherein the information provided by the client device (60) is indicative of the sequence number of said next packet to be decoded.

55. The software product (36) of claim 50, wherein the data packets carry a plurality of network abstraction layer (NAL) units, each NAL unit having a decoding order and a decoding order number (DON) indicative of a NAL unit decoding order in a payload structure for transmission, and wherein the information (300) provided by the client device (60) is indicative of the DON associated with said next NAL to be decoded.

**56.** The software product (36) of claim 50, wherein the data packets carry a plurality of network abstraction layer (NAL) units, each NAL unit having a decoding order, and a decoding order number (DON) indicative of a NAL unit decoding order in a payload structure for transmission, and wherein the information (300) provided by the client device (60) is indicative of the sequence number of the data packet that carries the next NAL to be decoded and the DON associated with the decoding order of said next NAL.

**Patentansprüche**

**1.** Verfahren zum Steuern des Pegels eines Empfängerpuffers (80) in einer Client-Vorrichtung (60) eines Multimedia-Streaming-Netzwerks (1), das Streaming-Netzwerk (1) umfassend eine Server-Vorrichtung (10) zum Bereitstellen von Streaming-Daten in einer Vielzahl von Datenpaketen für eine Client-Vorrichtung (60) und eine Client-Vorrichtung (60) zum Decodieren der Datenpakete in einer Decodierungsreihenfolge basierend auf einer Vielzahl von Decodierungsreihenfolgenwerten, die mit einer Playout-Reihenfolge assoziiert sind, die Client-Vorrichtung (60) umfassend einen Empfängerpuffer (80) zum Speichern von mindestens einigen der Datenpakete, um eine Differenz zwischen der Datenübertragungsmenge durch die Server-Vorrichtung (10) und der Datennutzungsmenge durch die Client-Vorrichtung (60) zu kompensieren, das Verfahren umfassend:

Führen, durch die Server-Vorrichtung (10), einer Aufzeichnung, die die an die Client-Vorrichtung (60) gesandten Datenpakete und die mit den Datenpaketen assoziierte Decodierungsreihenfolge angibt;
Bestimmen, durch die Client-Vorrichtung (60), des nächsten zu decodierenden Pakets unter den Paketen in dem Empfängerpuffer (80) basierend auf den Decodierungsreihenfolgenwerten;
Signalisieren, durch die Client-Vorrichtung an die Server-Vorrichtung (10), von Informationen (300), die das nächste zu decodierende Paket angeben; und
Rekonstruieren, durch die Server-Vorrichtung (10), einer Liste der Datenpakete in dem Empfängerpuffer (80) unter Verwendung der an die Server-Vorrichtung (10) signalisierten Informationen (300) und der Aufzeichnung, um der Server-Vorrichtung (10) zu gestatten, die für die Client-Vorrichtung (60) bereitgestellte Streaming-Datenmenge anzupassen.

**2.** Verfahren nach Anspruch 1, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

**3.** Verfahren nach Anspruch 2, wobei jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Sequenznummer des nächsten zu decodierenden Pakets angeben.

**4.** Verfahren nach Anspruch 2, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Einheit-Nummer der nächsten zu decodierenden Einheit und die Sequenznummer des Pakets, zu dem die nächste Einheit gehört, angeben.

**5.** Verfahren nach Anspruch 4, wobei die Server-Vorrichtung (10) eine Liste von Einheiten, die gesandt wurden, und eine Aufzeichnung von Einheit-Nummer und der Sequenznummer des Pakets, zu dem die gesandte Einheit gehört, und eine Abbildung zwischen der Sequenznummer und Einheit-Nummer auf die Decodierungsreihenfolge zum Bestimmen der Dateneinheiten in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

**6.** Verfahren nach Anspruch 4, wobei die an die Server-Vorrichtung (10) signalisierten Informationen (300) ferner eine Differenz zwischen einer geplanten Playout-Zeit der nächsten zu decodierenden Einheit und der Decodierungszeit der nächsten Einheit angeben.

**7.** Verfahren nach Anspruch 3, wobei die Server-Vorrichtung (10) eine Liste von Paket-Sequenznummern, die gesandt wurden, und eine Abbildung zwischen den Sequenznummern und der Decodierungsreihenfolge zum Bestimmen der Datenpakete in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

8. Verfahren nach Anspruch 3, wobei die an die Server-Vorrichtung (10) signalisierten Informationen (300) ferner eine Differenz zwischen einer geplanten Playout-Zeit des nächsten zu decodierenden Pakets und der Decodierungszeit des nächsten Pakets angeben.

9. Verfahren nach Anspruch 6 oder 7, wobei die an die Server-Vorrichtung (10) signalisierten Informationen (300) ferner die höchste von der Client-Vorrichtung (60) empfangene Sequenznummer angeben, um der Server-Vorrichtung (10) zu gestatten, die Datenpakete in dem Empfängerpuffer (80) zu bestimmen.

10. Verfahren nach Anspruch 2, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

11. Verfahren nach Anspruch 1, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die mit der nächsten zu decodierenden NAL assoziierte DON angeben.

12. Verfahren nach Anspruch 11, wobei die Server-Vorrichtung (10) eine Liste von NAL-Einheiten, die gesandt wurden, und eine Abbildung zwischen den NAL-Einheiten und der Decodierungsreihenfolge zur Bestimmung der Datenpakete in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

13. Verfahren nach Anspruch 1, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die Sequenznummer des Datenpakets angeben, das die nächste zu decodierende NAL und die mit der Decodierungsreihenfolge der nächsten NAL assoziierte DON trägt.

14. Multimedia-Streaming-Netzwerk (1), umfassend eine Server-Vorrichtung (10) zum Bereitstellen von Streaming-Daten in einer Vielzahl von Datenpaketen für eine Client-Vorrichtung (60) und eine Client-Vorrichtung (60) zum Decodieren der Datenpakete in einer Decodierungsreihenfolge basierend auf einer Vielzahl von Decodierungsreihenfolgenwerten, die mit einer Playout-Reihenfolge assoziiert sind, wobei die Server-Vorrichtung (10) konfiguriert ist, um eine Aufzeichnung zu führen, die die an die Client-Vorrichtung (60) gesandten Datenpakete und die mit den Datenpaketen assoziierte Decodierungsreihenfolge angibt, wobei die Client-Vorrichtung (60) umfasst:

einen Empfängerpuffer (80) zum Speichern von mindestens einigen der Datenpakete, um eine Differenz zwischen der Datenübertragungsmenge durch die Server-Vorrichtung (10) und der Datennutzungsmenge durch die Client-Vorrichtung (60) zu kompensieren,
ein Software-Programm (112) mit ausführbarem Code zum Bestimmen des nächsten zu decodierenden Pakets unter den Datenpaketen in dem Empfängerpuffer (80) basierend auf den Decodierungsreihenfolgenwerten, und einen Mechanismus (70) zum Signalisieren, an die Server-Vorrichtung (10), von Informationen (300), die das nächste zu decodierende Paket unter den Paketen in dem Empfängerpuffer (80) basierend auf den Decodierungsreihenfolgenwerten angeben, um der Server-Vorrichtung (10) zu gestatten, eine Liste von Datenpaketen in dem Empfängerpuffer (80) unter Verwendung der Informationen (300) und der Aufzeichnung zu rekonstruieren, um die Rate von Streaming-Daten, die für die Client-Vorrichtung (60) bereitgestellt werden, anzupassen.

15. Streaming-Netzwerk (1) nach Anspruch 14, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

16. Streaming-Netzwerk (1) nach Anspruch 14, wobei jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Sequenznummer des nächsten zu decodierenden Pakets angeben.

17. Streaming-Netzwerk (1) nach Anspruch 15, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Einheit-Nummer der nächsten zu decodierenden Einheit und die Sequenznummer des Pakets, zu dem die nächste Einheit gehört, angeben.

18. Streaming-Netzwerk (1) nach Anspruch 17, wobei die Server-Vorrichtung (10) eine Liste von Einheiten, die gesandt wurden, und eine Aufzeichnung von Einheit-Nummer und der Sequenznummer des Pakets, zu dem die gesandte Einheit gehört, und eine Abbildung zwischen der Sequenznummer und Einheit-Nummer auf die Decodierungsreihenfolge zum Bestimmen der Dateneinheiten in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

19. Streaming-Netzwerk (1) nach Anspruch 17, wobei die an die Server-Vorrichtung (10) signalisierten Informationen (300) ferner eine Differenz zwischen einer geplanten Playout-Zeit der nächsten zu decodierenden Einheit und der Decodierungszeit der nächsten Einheit angeben.

20. Streaming-Netzwerk (1) nach Anspruch 17, wobei die an die Server-Vorrichtung (10) signalisierten Informationen (300) ferner die höchste von der Client-Vorrichtung (60) empfangene Sequenznummer angeben, um der Server-Vorrichtung (10) zu gestatten, die Datenpakete in dem Empfängerpuffer (80) zu bestimmen.

21. Streaming-Netzwerk (1) nach Anspruch 15, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

22. Streaming-Netzwerk (1) nach Anspruch 16, wobei die Server-Vorrichtung (10) eine Liste von Paket-Sequenznummern, die gesandt wurden, und eine Abbildung zwischen den Sequenznummern und der Decodierungsreihenfolge zum Bestimmen der Datenpakete in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

23. Streaming-Netzwerk (1) nach Anspruch 16, wobei die an die Server-Vorrichtung (10) signalisierten Informationen (300) ferner eine Differenz zwischen einer geplanten Playout-Zeit des nächsten zu decodierenden Pakets und der Decodierungszeit des nächsten Pakets angeben.

24. Streaming-Netzwerk (1) nach Anspruch 22, wobei die an die Server-Vorrichtung (10) signalisierten Informationen (300) ferner die höchste von der Client-Vorrichtung (60) empfangene Sequenznummer angeben, um der Server-Vorrichtung (10) zu gestatten, die Datenpakete in dem Empfängerpuffer (80) zu bestimmen.

25. Streaming-Netzwerk (1) nach Anspruch 14, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die mit der nächsten zu decodierenden NAL assoziierte DON angeben.

26. Streaming-Netzwerk (1) nach Anspruch 25, wobei die Server-Vorrichtung (10) eine Liste von NAL-Einheiten, die gesandt wurden, und eine Abbildung zwischen den NAL-Einheiten und der Decodierungsreihenfolge zur Bestimmung der Datenpakete in dem Empfängerpuffer (80) basierend auf der Abbildung führt, um die für die Client-Vorrichtung (60) bereitgestellte Streaming-Datenmenge basierend auf der Bestimmung in der Server-Vorrichtung (10) anzupassen.

27. Streaming-Netzwerk (1) nach Anspruch 24, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die Sequenznummer des Datenpakets angeben, das die nächste zu decodierende NAL und die mit der Decodierungsreihenfolge der nächsten NAL assoziierte DON trägt.

28. Client-Vorrichtung (60) für ein Multimedia-Streaming-Netzwerk (1), das Streaming-Netzwerk (1) umfassend die Client-Vorrichtung (60) und eine Server-Vorrichtung (10) zum Bereitstellen von Streaming-Daten in einer Vielzahl von Paketen an die Client-Vorrichtung (60), wobei die Server-Vorrichtung (10) konfiguriert ist, um eine Aufzeichnung zu führen, die die an die Client-Vorrichtung (60) gesandten Datenpakete und die mit den Datenpaketen assoziierte Decodierungsreihenfolge angibt, wobei die Client-Vorrichtung (60) konfiguriert ist, um die Datenpakete in einer Decodierungsreihenfolge basierend auf einer Vielzahl von Decodierungsreihenfolgenwerten, die mit einer Playout-Reihenfolge assoziiert sind, zu decodieren, wobei die Client-Vorrichtung (60) umfasst:

einen Empfängerpuffer (80) zum Speichern von mindestens einigen der Datenpakete, um eine Differenz zwischen der Datenübertragungsmenge durch die Server-Vorrichtung (10) und der Datennutzungsmenge in der Client-Vorrichtung (60) zu kompensieren;
ein Software-Programm (112) mit ausführbarem Code zum Bestimmen des nächsten zu decodierenden Pakets unter den Datenpaketen in dem Empfängerpuffer (80) basierend auf den Decodierungsreihenfolgenwerten, und einen Mechanismus (70) zum Signalisieren, an die Server-Vorrichtung (10), von Informationen (300), die das nächste zu decodierende Paket unter den Paketen in dem Empfängerpuffer (80) basierend auf den Decodierungsreihenfolgenwerten angeben, um der Server-Vorrichtung (10) zu gestatten, eine Liste von Datenpaketen in dem Empfängerpuffer (80) unter Verwendung der an die Server-Vorrichtung (10) signalisierten Informationen (300) und der Aufzeichnung zu rekonstruieren, um die für die Client-Vorrichtung (60) bereitgestellte Streaming-Datenmenge anzupassen.

29. Client-Vorrichtung (60) nach Anspruch 28, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

30. Client-Vorrichtung (60) nach Anspruch 29, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Einheit-Nummer der nächsten zu decodierenden Einheit und die Sequenznummer des Pakets, zu dem die nächste Einheit gehört, angeben.

31. Client-Vorrichtung (60) nach Anspruch 29, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

32. Client-Vorrichtung (60) nach Anspruch 28, wobei das Software-Programm (112) ausführbaren Code zum Bestimmen der Decodierungsreihenfolge der Datenpakete in dem Empfängerpuffer (80) basierend auf den Decodiererreihenfolgenwerten aufweist.

33. Client-Vorrichtung (60) nach Anspruch 28, wobei jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Sequenznummer des nächsten zu decodierenden Pakets angeben.

34. Client-Vorrichtung (60) nach Anspruch 28, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die mit der nächsten zu decodierenden NAL assoziierte DON angeben.

35. Client-Vorrichtung (60) nach Anspruch 28, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die an die Server-Vorrichtung (10) signalisierten Informationen (300) die Sequenznummer des Datenpakets, das die nächste zu decodierende NAL und die mit der Decodierungsreihenfolge der nächsten NAL assoziierte DON trägt, angeben.

36. Server-Vorrichtung (10) für ein Multimedia-Streaming-Netzwerk (1), das Streaming-Netzwerk (1) umfassend die Server-Vorrichtung (10) und eine Client-Vorrichtung (60) zum Empfangen von Streaming-Daten in einer Vielzahl von Datenpaketen von der Server-Vorrichtung (10), wobei die Server-Vorrichtung (10) konfiguriert ist, um eine Aufzeichnung zu führen, die die an die Client-Vorrichtung (60) gesandten Datenpakete und die mit den Datenpaketen assoziierte Decodierungsreihenfolge angibt, wobei die Client-Vorrichtung (60) konfiguriert ist, um die Datenpakete in einer Decodierungsreihenfolge basierend auf einer Vielzahl von Decodierungsreihenfolgenwerten, die mit einer Playout-Reihenfolge assoziiert sind, zu decodieren, wobei die Client-Vorrichtung (60) einen Empfängerpuffer (80) zum Speichern von mindestens einigen der Datenpakete umfasst, um eine Differenz zwischen der Datenübertragungsmenge durch die Server-Vorrichtung (10) und der Datennutzungsmenge durch die Client-Vorrichtung (60) zu kompensieren, wobei die Server-Vorrichtung (10) umfasst:

   einen Mechanismus (20) zum Empfangen von Informationen (300) von der Client-Vorrichtung (60), die das nächste zu decodierende Paket unter den Paketen in dem Empfängerpuffer (80) basierend auf den Decodierungsreihenfolgenwerten in der Client-Vorrichtung (60) angeben; und
   ein Software-Programm (36) zum Rekonstruieren einer Liste von Datenpaketen in dem Empfängerpuffer (80) unter Verwendung der Informationen (300) von der Client-Vorrichtung (60) und der Aufzeichnung, um die für die Client-Vorrichtung (60) bereitgestellte Streaming-Datenmenge anzupassen.

37. Server-Vorrichtung (10) nach Anspruch 36, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

38. Server-Vorrichtung (10) nach Anspruch 37, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Einheit-Nummer der nächsten zu decodierenden Einheit und die Sequenznummer des Pakets, zu dem die nächste Einheit gehört, angeben.

39. Server-Vorrichtung (10) nach Anspruch 37, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

40. Server-Vorrichtung (10) nach Anspruch 36, wobei jedes der Datenpakete eine Sequenznummer aufweist, die sowohl der Client-Vorrichtung (60) als auch der Server-Vorrichtung (10) bekannt ist, und wobei die von der Client-Vorrichtung (60) empfangenen Informationen (300) die Sequenznummer des nächsten zu decodierenden Pakets angeben.

41. Server-Vorrichtung (10) nach Anspruch 36, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die von der Client-Vorrichtung (60) empfangenen Informationen (300) die mit der nächsten zu decodierenden NAL assoziierte DON angeben.

42. Server-Vorrichtung (10) nach Anspruch 36, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die von der Client-Vorrichtung (60) empfangenen Informationen (300) die Sequenznummer des Datenpakets, das die nächste zu decodierende NAL trägt, und die mit der Decodierungsreihenfolge der nächsten NAL assoziierte DON angeben.

43. Software-Produkt (112), eingebettet in einem computerlesbaren Medium zur Verwendung in einer Client-Vorrichtung (60) eines Multimedia-Streaming-Netzwerks (1), das Streaming-Netzwerk (1) umfassend die Client-Vorrichtung (60) und eine Server-Vorrichtung (10) zum Bereitstellen von Streaming-Daten in einer Vielzahl von Paketen an die Client-Vorrichtung (60), wobei die Server-Vorrichtung (10) konfiguriert ist, um eine Aufzeichnung zu führen, die die an die Client-Vorrichtung (60) gesandten Datenpakete und die mit den Datenpaketen assoziierte Decodierungsreihenfolge angibt, wobei die Client-Vorrichtung (60) konfiguriert ist, um die Datenpakete in einer Decodierungsreihenfolge basierend auf einer Vielzahl von Decodierungsreihenfolgenwerten, die mit einer Playout-Reihenfolge assoziiert sind, zu decodieren, wobei die Client-Vorrichtung (60) einen Empfängerpuffer (80) zum Speichern von mindestens einigen der Datenpakete umfasst, um eine Differenz zwischen der Datenübertragungsmenge durch die Server-Vorrichtung (10) und der Datennutzungsmenge durch die Client-Vorrichtung (60) zu kompensieren, wobei das Software-Produkt (112) umfasst:

Code zum Bestimmen des nächsten zu decodierenden Pakets unter den Paketen in dem Empfängerpuffer (80) basierend auf den Decodierungsreihenfolgenwerten, um für die Server-Vorrichtung (10) Informationen (300) bereitzustellen, die das nächste zu decodierende Paket angeben, wobei die Informationen (300) der Server-Vorrichtung (10) gestatten, eine Liste von Datenpaketen in dem Empfängerpuffer (80) unter Verwendung der Informationen (300) und der Aufzeichnung zu rekonstruieren, um die für die Client-Vorrichtung (60) bereitgestellte Streaming-Datenmenge anzupassen.

44. Software-Produkt (112) nach Anspruch 43, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

45. Software-Produkt (112) nach Anspruch 44, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung signalisierten Informationen (300) die Einheit-Nummer der nächsten zu decodierenden Einheit und die Sequenznummer des Pakets, zu dem die nächste Einheit gehört, angeben.

46. Software-Produkt (112) nach Anspruch 44, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

47. Software-Produkt (112) nach Anspruch 43, wobei jedes der Datenpakete eine Sequenznummer aufweist, die sowohl der Client-Vorrichtung (60) als auch der Server-Vorrichtung (10) bekannt ist, und wobei die für die Server-Vorrichtung (10) bereitgestellten Informationen (300) die Sequenznummer des nächsten zu decodierenden Pakets angeben.

48. Software-Produkt (112) nach Anspruch 43, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die für die Server-Vorrichtung (10) bereitgestellten Informationen (300) die mit der nächsten zu decodierenden NAL assoziierte DON angeben.

49. Software-Produkt (112) nach Anspruch 43, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die für die Server-Vorrichtung (10) bereitgestellten Informationen (300) die Sequenznummer des Datenpakets, das die nächste zu decodierende NAL trägt, und die mit der Decodierungsreihenfolge der nächsten NAL assoziierte DON angeben.

50. Software-Produkt (36), eingebettet in einem computerlesbaren Medium zur Verwendung in einer Server-Vorrichtung (10) eines Multimedia-Streaming-Netzwerks (1), das Streaming-Netzwerk (1) umfassend die Server-Vorrichtung (10) und eine Client-Vorrichtung (60) zum Empfangen von Streaming-Daten in einer Vielzahl von Paketen von der Server-Vorrichtung (10), wobei die Server-Vorrichtung (10) konfiguriert ist, um eine Aufzeichnung zu führen, die die an die Client-Vorrichtung (60) gesandten Datenpakete und die mit den Datenpaketen assoziierte Decodierungsreihenfolge angibt, wobei die Client-Vorrichtung (60) konfiguriert ist, um die Datenpakete in einer Decodierungsreihenfolge basierend auf einer Vielzahl von Decodierungsreihenfolgenwerten, die mit einer Playout-Reihenfolge assoziiert sind, zu decodieren, wobei die Client-Vorrichtung (60) einen Empfängerpuffer (80) zum Speichern von mindestens einigen der Datenpakete umfasst, um eine Differenz zwischen der Datenübertragungsmenge durch die Server-Vorrichtung (10) und der Datennutzungsmenge durch die Client-Vorrichtung (60) zu kompensieren, wobei das Software-Produkt (36) umfasst:

Code zum Rekonstruieren einer Liste von Datenpaketen in dem Empfängerpuffer (80) unter Verwendung der Aufzeichnung und der von der Client-Vorrichtung (60) empfangenen Informationen (300), die das nächste zu decodierende Paket in der Client-Vorrichtung angeben, um der Server-Vorrichtung (10) zu gestatten, die für die Client-Vorrichtung (60) bereitgestellte Streaming-Datenmenge anzupassen.

51. Software-Produkt (36) nach Anspruch 50, wobei die Pakete mit einer Vielzahl von Einheiten assoziiert sind, die die nächste zu decodierende Einheit enthalten, und wobei das nächste zu decodierende Paket das Paket ist, zu dem die nächste zu decodierende Einheit gehört.

52. Software-Produkt (36) nach Anspruch 50, wobei jede der Einheiten eine Einheit-Nummer aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) die Einheit-Nummer der nächsten zu decodierenden Einheit und die Sequenznummer des Pakets, zu dem die nächste Einheit gehört, angeben.

53. Software-Produkt (36) nach Anspruch 50, wobei jede der Einheiten einen Zeitstempel aufweist und jedes der Datenpakete eine Sequenznummer aufweist, die sowohl der Client-Vorrichtung (60) als auch der Server-Vorrichtung (10) bekannt ist, und wobei die an die Server-Vorrichtung (10) signalisierten Informationen (300) den Zeitstempel der nächsten zu decodierenden Einheit und die Sequenznummer des Pakets, zu dem die nächste Einheit gehört, angeben.

54. Software-Produkt (36) nach Anspruch 50, wobei jedes der Datenpakete eine Sequenznummer aufweist, die sowohl der Client-Vorrichtung (60) als auch der Server-Vorrichtung (10) bekannt ist, und wobei die von der Client-Vorrichtung (60) bereitgestellten Informationen die Sequenznummer des nächsten zu decodierenden Pakets angeben.

55. Software-Produkt (36) nach Anspruch 50, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die von der Client-Vorrichtung (60) bereitgestellten Informationen (300) die mit der nächsten zu decodierenden NAL assoziierte DON angeben.

56. Software-Produkt (36) nach Anspruch 50, wobei die Datenpakete eine Vielzahl von Netzwerk-Abstraktionsschicht- bzw. NAL-Einheiten tragen, wobei jede NAL-Einheit eine Decodierungsreihenfolge und eine Decodierungsreihenfolgenfolgen-Nummer (DON) aufweist, die eine NAL-Einheit-Decodierungsreihenfolge in einer Nutzlaststruktur für Übertragung angeben, und wobei die von der Client-Vorrichtung (60) bereitgestellten Informationen (300) die Sequenznummer des Datenpakets, das die nächste zu decodierende NAL trägt, und die mit der Decodierungsreihenfolge der nächsten NAL assoziierte DON angeben.

## Revendications

1. Procédé pour réguler le niveau d'un tampon de réception (80) dans un dispositif client (60) d'un réseau de diffusion multimédia en continu (1), le réseau de diffusion en continu (1) comprenant un dispositif serveur (10) pour fournir à un dispositif client (60) des données de diffusion en continu dans une pluralité de paquets de données, et un dispositif client (60) pour décoder les paquets de données dans un ordre de décodage sur la base d'une pluralité de valeurs d'ordre de décodage associées à un ordre de lecture, le dispositif client (60) comprenant un tampon de réception (80) pour stocker au moins certains des paquets de données pour compenser un écart entre la quantité de transmission de données par le dispositif serveur (10) et la quantité d'utilisation de données par le dispositif client (60), ledit procédé comprenant les étapes consistant à :

tenir, par le dispositif serveur (10), un registre indiquant les paquets de données envoyés au dispositif client (60) et l'ordre de décodage associé auxdits paquets de données ;
déterminer, par le dispositif client (60), le prochain paquet à décoder parmi les paquets dans le tampon de réception (80) sur la base des valeurs d'ordre de décodage ;
signaler, par le dispositif client au dispositif serveur (10), des informations (300) indiquant ledit prochain paquet à décoder ; et

reconstruire, par le dispositif serveur (10), une liste des paquets de données dans le tampon de réception (80) à partir des informations (300) signalées au dispositif serveur (10) et du registre pour permettre au dispositif serveur (10) d'ajuster la quantité de données de diffusion en continu fournie au dispositif client (60).

**2.** Procédé selon la revendication 1, dans lequel les paquets sont associés à une pluralité d'unités comprenant la prochaine unité à décoder, et dans lequel le prochain paquet à décoder est le paquet auquel appartient la prochaine unité à décoder.

**3.** Procédé selon la revendication 2, dans lequel chacun des paquets de données possède un numéro de séquence connu à la fois du dispositif client (60) et du dispositif serveur (10), et dans lequel les informations (300) signalées au dispositif serveur (10) indiquent le numéro de séquence du prochain paquet à décoder.

**4.** Procédé selon la revendication 2, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur (10) indiquent le numéro d'unité de ladite prochaine unité à décoder et le numéro de séquence du paquet auquel appartient ladite prochaine unité.

**5.** Procédé selon la revendication 4, dans lequel le dispositif serveur (10) tient à jour une liste d'unités qui ont été envoyées et un registre du numéro d'unité et du numéro de séquence du paquet auquel appartiennent les unités envoyées et une mise en correspondance desdits numéro de séquence et numéro d'unité avec l'ordre de décodage pour déterminer les unités de données dans le tampon de réception (80) sur la base de ladite mise en correspondance de manière à ajuster la quantité de données de diffusion en continu fournie au dispositif client (60) sur la base de ladite détermination dans le dispositif serveur (10).

**6.** Procédé selon la revendication 4, dans lequel les informations (300) signalées au dispositif serveur (10) indiquent par ailleurs un écart entre un temps de lecture programmé de ladite prochaine unité à décoder et le temps de décodage de ladite prochaine unité.

**7.** Procédé selon la revendication 3, dans lequel le dispositif serveur (10) tient à jour une liste de numéros de séquence de paquet qui ont été envoyés et une mise en correspondance entre lesdits numéros de séquence et l'ordre de décodage pour déterminer les paquets de données dans le tampon de réception (80) sur la base de ladite mise en correspondance de manière à ajuster la quantité de données de diffusion en continu fournie au dispositif client (60) sur la base de ladite détermination dans le dispositif serveur (10).

**8.** Procédé selon la revendication 3, dans lequel les informations (300) signalées au dispositif serveur (10) indiquent par ailleurs un écart entre un temps de lecture programmé dudit prochain paquet à décoder et le temps de décodage dudit prochain paquet.

**9.** Procédé selon la revendication 6 ou 7, dans lequel les informations (300) signalées au dispositif serveur (10) indiquent par ailleurs le numéro de séquence le plus élevé reçu par le dispositif client (60) de manière à permettre au dispositif serveur (10) de déterminer les paquets de données dans le tampon de réception (80).

**10.** Procédé selon la revendication 2, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

**11.** Procédé selon la revendication 1, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le DON associé à ladite prochaine NAL à décoder.

**12.** Procédé selon la revendication 11, dans lequel le dispositif serveur (10) tient à jour une liste d'unités NAL qui ont été envoyées et une mise en correspondance entre lesdites unités NAL et l'ordre de décodage pour déterminer les paquets de données dans le tampon de réception (80) sur la base de ladite mise en correspondance de manière à ajuster la quantité de données de diffusion en continu fournie au dispositif client (60) sur la base de ladite détermination dans le dispositif serveur (10).

**13.** Procédé selon la revendication 1, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le numéro de séquence du paquet de données qui achemine la prochaine NAL à décoder et le DON associé à l'ordre de décodage de ladite prochaine NAL.

**14.** Réseau de diffusion multimédia en continu (1), comprenant un dispositif serveur (10) pour fournir à un dispositif client (60) des données de diffusion en continu dans une pluralité de paquets de données, et un dispositif client (60) pour décoder les paquets de données dans un ordre de décodage sur la base d'une pluralité de valeurs d'ordre de décodage associées à un ordre de lecture, le dispositif serveur (10) étant conçu pour tenir un registre indiquant les paquets de données envoyés au dispositif client (60) et l'ordre de décodage associé auxdits paquets de données, lequel dispositif client (60) comprend :

un tampon de réception (80) pour stocker au moins certains des paquets de données pour compenser un écart entre la quantité de transmission de données par le dispositif serveur (10) et la quantité d'utilisation de données par le dispositif client (60),
un programme logiciel (112) possédant un code exécutable pour déterminer le prochain paquet à décoder parmi les paquets de données dans le tampon de réception (80) sur la base des valeurs d'ordre de décodage, et
un mécanisme (70) pour signaler au dispositif serveur (10) des informations (300) indiquant le prochain paquet à décoder parmi les paquets dans le tampon de réception (80) sur la base des valeurs d'ordre de décodage de manière à permettre au dispositif serveur (10) de reconstruire une liste de paquets de données dans le tampon de réception (80) à partir des informations (300) et du registre pour ajuster le débit de données de diffusion en continu fournies au dispositif client (60).

**15.** Réseau de diffusion en continu (1) selon la revendication 14, dans lequel les paquets sont associés à une pluralité d'unités comprenant la prochaine unité à décoder, et dans lequel le prochain paquet à décoder est le paquet auquel appartient la prochaine unité à décoder.

**16.** Réseau de diffusion en continu (1) selon la revendication 14, dans lequel chacun des paquets de données possède un numéro de séquence connu à la fois du dispositif client (60) et du dispositif serveur (10), et dans lequel les informations (300) signalées au dispositif serveur (10) indiquent le numéro de séquence du prochain paquet à décoder.

**17.** Réseau de diffusion en continu (1) selon la revendication 15, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur (10) indiquent le numéro d'unité de ladite prochaine unité à décoder et le numéro de séquence du paquet auquel appartient ladite prochaine unité.

**18.** Réseau de diffusion en continu (1) selon la revendication 17, dans lequel le dispositif serveur (10) tient à jour une liste d'unités qui ont été envoyées et un registre du numéro d'unité et du numéro de séquence du paquet auquel appartient l'unité envoyée et une mise en correspondance desdits numéro de séquence et numéro d'unité avec l'ordre de décodage pour déterminer les unités de données dans le tampon de réception (80) sur la base de ladite mise en correspondance de manière à ajuster la quantité de données de diffusion en continu fournie au dispositif client (60) sur la base de ladite détermination dans le dispositif serveur (10).

**19.** Réseau de diffusion en continu (1) selon la revendication 17, dans lequel les informations (300) signalées au dispositif serveur (10) indiquent par ailleurs un écart entre un temps de lecture programmé de ladite prochaine unité à décoder et le temps de décodage de ladite prochaine unité.

**20.** Réseau de diffusion en continu (1) selon la revendication 17, dans lequel les informations (300) signalées au dispositif serveur (10) indiquent par ailleurs le numéro de séquence le plus élevé reçu par le dispositif client (60) de manière à permettre au dispositif serveur (10) de déterminer les paquets de données dans le tampon de réception (80).

**21.** Réseau de diffusion en continu (1) selon la revendication 15, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

22. Réseau de diffusion en continu (1) selon la revendication 16, dans lequel le dispositif serveur (10) tient à jour une liste de numéros de séquence de paquet qui ont été envoyés et une mise en correspondance entre lesdits numéros de séquence et l'ordre de décodage pour déterminer les paquets de données dans le tampon de réception (80) sur la base de ladite mise en correspondance de manière à ajuster la quantité de données de diffusion en continu fournie au dispositif client (60) sur la base de ladite détermination dans le dispositif serveur (10).

23. Réseau de diffusion en continu (1) selon la revendication 16, dans lequel les informations (300) signalées au dispositif serveur (10) indiquent par ailleurs un écart entre un temps de lecture programmé dudit prochain paquet à décoder et le temps de décodage dudit prochain paquet.

24. Réseau de diffusion en continu (1) selon la revendication 22, dans lequel les informations (300) signalées au dispositif serveur (10) indiquent par ailleurs le numéro de séquence le plus élevé reçu par le dispositif client (60) de manière à permettre au dispositif serveur (10) de déterminer les paquets de données dans le tampon de réception (80).

25. Réseau de diffusion en continu (1) selon la revendication 14, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le DON associé à ladite prochaine NAL à décoder.

26. Réseau de diffusion en continu (1) selon la revendication 25, dans lequel le dispositif serveur (10) tient à jour une liste d'unités NAL qui ont été envoyées et une mise en correspondance entre lesdites unités NAL et l'ordre de décodage pour déterminer les paquets de données dans le tampon de réception (80) sur la base de ladite mise en correspondance de manière à ajuster la quantité de données de diffusion en continu fournie au dispositif client (60) sur la base de ladite détermination dans le dispositif serveur (10).

27. Réseau de diffusion en continu (1) selon la revendication 24, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le numéro de séquence du paquet de données qui achemine la prochaine NAL à décoder et le DON associé à l'ordre de décodage de ladite prochaine NAL.

28. Dispositif client (60) pour un réseau de diffusion multimédia en continu (1), le réseau de diffusion en continu (1) comprenant le dispositif client (60) et un dispositif serveur (10) pour fournir au dispositif client (60) des données de diffusion en continu dans une pluralité de paquets, le dispositif serveur (10) étant conçu pour tenir un registre indiquant les paquets de données envoyés au dispositif client (60) et l'ordre de décodage associé auxdits paquets de données, le dispositif client (60) étant conçu pour décoder les paquets de données dans un ordre de décodage sur la base d'une pluralité de valeurs d'ordre de décodage associées à un ordre de lecture, lequel dispositif client (60) comprend :

un tampon de réception (80) pour stocker au moins certains des paquets de données pour compenser un écart entre la quantité de transmission de données par le dispositif serveur (10) et la quantité d'utilisation de données par le dispositif client (60) ;
un programme logiciel (112) possédant un code exécutable pour déterminer le prochain paquet à décoder parmi les paquets de données dans le tampon de réception (80) sur la base des valeurs d'ordre de décodage, et
un mécanisme (70) pour signaler au dispositif serveur (10) des informations (300) indiquant le prochain paquet à décoder parmi les paquets dans le tampon de réception (80) sur la base des valeurs d'ordre de décodage de manière à permettre au dispositif serveur (10) de reconstruire une liste de paquets de données dans le tampon de réception (80) à partir des informations (300) signalées au dispositif serveur (10) et du registre pour ajuster la quantité de données de diffusion en continu fournie au dispositif client (60).

29. Dispositif client (60) selon la revendication 28, dans lequel les paquets sont associés à une pluralité d'unités comprenant la prochaine unité à décoder, et dans lequel le prochain paquet à décoder est le paquet auquel appartient la prochaine unité à décoder.

**30.** Dispositif client (60) selon la revendication 29, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur (10) indiquent le numéro d'unité de ladite prochaine unité à décoder et le numéro de séquence du paquet auquel appartient ladite prochaine unité.

**31.** Dispositif client (60) selon la revendication 29, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

**32.** Dispositif client (60) selon la revendication 28, dans lequel le programme logiciel (112) possède un code exécutable pour déterminer l'ordre de décodage des paquets de données dans le tampon de réception (80) sur la base des valeurs d'ordre de décodeur.

**33.** Dispositif client (60) selon la revendication 28, dans lequel chacun des paquets de données possède un numéro de séquence connu à la fois du dispositif client (60) et du dispositif serveur (10), et dans lequel les informations (300) signalées au dispositif serveur (10) indiquent le numéro de séquence dudit prochain paquet à décoder.

**34.** Dispositif client (60) selon la revendication 28, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le DON associé à ladite prochaine NAL à décoder.

**35.** Dispositif client (60) selon la revendication 28, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) signalées au dispositif serveur (10) indiquent le numéro de séquence du paquet de données qui achemine la prochaine NAL à décoder et le DON associé à l'ordre de décodage de ladite prochaine NAL.

**36.** Dispositif serveur (10) pour un réseau de diffusion multimédia en continu (1), le réseau de diffusion en continu (1) comprenant le dispositif serveur (10) et un dispositif client (60) pour recevoir du dispositif serveur (10) des données de diffusion en continu dans une pluralité de paquets de données, le dispositif serveur (10) étant conçu pour tenir un registre indiquant les paquets de données envoyés au dispositif client (60) et l'ordre de décodage associé auxdits paquets de données, le dispositif client (60) étant conçu pour décoder les paquets de données dans un ordre de décodage sur la base d'une pluralité de valeurs d'ordre de décodage associées à un ordre de lecture, le dispositif client (60) comprenant un tampon de réception (80) pour stocker au moins certains des paquets de données pour compenser un écart entre la quantité de transmission de données par le dispositif serveur (10) et la quantité d'utilisation de données par le dispositif client (60), lequel dispositif serveur (10) comprend :

un mécanisme (20) pour recevoir du dispositif client (60) des informations (300) indiquant le prochain paquet à décoder parmi les paquets dans le tampon de réception (80) sur la base des valeurs d'ordre de décodage dans le dispositif client (60) ; et
un programme logiciel (36) pour reconstruire une liste de paquets de données dans le tampon de réception (80) à partir des informations (300) reçues du dispositif client (60) et du registre pour ajuster la quantité de données de diffusion en continu fournie au dispositif client (60).

**37.** Dispositif serveur (10) selon la revendication 36, dans lequel les paquets sont associés à une pluralité d'unités comprenant la prochaine unité à décoder, et dans lequel le prochain paquet à décoder est le paquet auquel appartient la prochaine unité à décoder.

**38.** Dispositif serveur (10) selon la revendication 37, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur (10) indiquent le numéro d'unité de ladite prochaine unité à décoder et le numéro de séquence du paquet auquel appartient ladite prochaine unité.

39. Dispositif serveur (10) selon la revendication 37, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

40. Dispositif serveur (10) selon la revendication 36, dans lequel chacun des paquets de données possède un numéro de séquence connu à la fois du dispositif client (60) et du dispositif serveur (10), et dans lequel les informations (300) reçues du dispositif client (60) indiquent le numéro de séquence dudit prochain paquet à décoder.

41. Dispositif serveur (10) selon la revendication 36, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) reçues du dispositif client (60) indiquent le DON associé à ladite prochaine NAL à décoder.

42. Dispositif serveur (10) selon la revendication 36, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) reçues du dispositif client (60) indiquent le numéro de séquence du paquet de données qui achemine la prochaine NAL à décoder et le DON associé à l'ordre de décodage de ladite prochaine NAL.

43. Produit logiciel (112) intégré à un support exploitable par ordinateur destiné à être utilisé dans un dispositif client (60) d'un réseau de diffusion multimédia en continu (1), le réseau de diffusion en continu (1) comprenant le dispositif client (60) et un dispositif serveur (10) pour fournir au dispositif client (60) des données de diffusion en continu dans une pluralité de paquets, le dispositif serveur (10) étant conçu pour tenir un registre indiquant les paquets de données envoyés au dispositif client (60) et l'ordre de décodage associé auxdits paquets de données, le dispositif client (60) étant conçu pour décoder les paquets de données dans un ordre de décodage sur la base d'une pluralité de valeurs d'ordre de décodage associées à un ordre de lecture, le dispositif client (60) comprenant un tampon de réception (80) pour stocker au moins certains des paquets de données pour compenser un écart entre la quantité de transmission de données par le dispositif serveur (10) et la quantité d'utilisation de données par le dispositif client (60), lequel produit logiciel (112) comprend :

un code pour déterminer le prochain paquet à décoder parmi les paquets de données dans le tampon de réception (80) sur la base des valeurs d'ordre de décodage, de manière à fournir au dispositif serveur (10) des informations (300) indiquant ledit prochain paquet à décoder, les informations (300) permettant au dispositif serveur (10) de reconstruire une liste de paquets de données dans le tampon de réception (80) à partir des informations (300) et du registre pour ajuster la quantité de données de diffusion en continu fournie au dispositif client (60).

44. Produit logiciel (112) selon la revendication 43, dans lequel les paquets sont associés à une pluralité d'unités comprenant la prochaine unité à décoder, et dans lequel le prochain paquet à décoder est le paquet auquel appartient la prochaine unité à décoder.

45. Produit logiciel (112) selon la revendication 44, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur indiquent le numéro d'unité de ladite prochaine unité à décoder et le numéro de séquence du paquet auquel appartient ladite prochaine unité.

46. Produit logiciel (112) selon la revendication 44, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

**47.** Produit logiciel (112) selon la revendication 43, dans lequel chacun des paquets de données possède un numéro de séquence connu à la fois du dispositif client (60) et du dispositif serveur (10), et dans lequel les informations (300) fournies au dispositif serveur (10) indiquent le numéro de séquence dudit prochain paquet à décoder.

**48.** Produit logiciel (112) selon la revendication 43, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) fournies au dispositif serveur (10) indiquent le DON associé à ladite prochaine NAL à décoder.

**49.** Produit logiciel (112) selon la revendication 43, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) fournies au dispositif serveur (10) indiquent le numéro de séquence du paquet de données qui achemine la prochaine NAL à décoder et le DON associé à l'ordre de décodage de ladite prochaine NAL.

**50.** Produit logiciel (36) intégré à un support exploitable par ordinateur destiné à être utilisé dans un dispositif serveur (10) d'un réseau de diffusion multimédia en continu (1), le réseau de diffusion en continu (1) comprenant le dispositif serveur (10) et un dispositif client (60) pour recevoir du dispositif serveur (10) des données de diffusion en continu dans une pluralité de paquets de données, le dispositif serveur (10) étant conçu pour tenir un registre indiquant les paquets de données envoyés au dispositif client (60) et l'ordre de décodage associé auxdits paquets de données, le dispositif client (60) étant conçu pour décoder les paquets de données dans un ordre de décodage sur la base d'une pluralité de valeurs d'ordre de décodage associées à un ordre de lecture, le dispositif client (60) comprenant un tampon de réception (80) pour stocker au moins certains des paquets de données pour compenser un écart entre la quantité de transmission de données par le dispositif serveur (10) et la quantité d'utilisation de données par le dispositif client (60), lequel produit logiciel (36) comprend :

un code pour reconstruire une liste de paquets de données dans le tampon de réception (80) à partir du registre et d'informations (300) reçus du dispositif client (60) indiquant le prochain paquet à décoder dans le dispositif client pour permettre au dispositif serveur (10) d'ajuster la quantité de données de diffusion en continu fournie au dispositif client (60).

**51.** Produit logiciel (36) selon la revendication 50, dans lequel les paquets sont associés à une pluralité d'unités comprenant la prochaine unité à décoder, et dans lequel le prochain paquet à décoder est le paquet auquel appartient la prochaine unité à décoder.

**52.** Produit logiciel (36) selon la revendication 50, dans lequel chacune des unités possède un numéro d'unité et chacun des paquets de données possède un numéro de séquence connus à la fois du dispositif client (60) et du dispositif serveur (10), et dans lequel les informations (300) signalées au dispositif serveur (10) indiquent le numéro d'unité de ladite prochaine unité à décoder et le numéro de séquence du paquet auquel appartient ladite prochaine unité.

**53.** Produit logiciel (36) selon la revendication 50, dans lequel chacune des unités possède une estampille temporelle et chacun des paquets de données possède un numéro de séquence connus à la fois du dispositif client (60) et du dispositif serveur (10), et dans lequel les informations (300) signalées au dispositif serveur (10) indiquent l'estampille temporelle de ladite prochaine unité à décoder et le numéro de séquence du paquet auquel appartient ladite prochaine unité.

**54.** Produit logiciel (36) selon la revendication 50, dans lequel chacun des paquets de données possède un numéro de séquence connu à la fois du dispositif client (60) et du dispositif serveur (10), et dans lequel les informations fournies au dispositif client (60) indiquent le numéro de séquence du prochain paquet à décoder.

**55.** Produit logiciel (36) selon la revendication 50, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) fournies au dispositif client (60) indiquent le DON associé à ladite prochaine NAL à décoder.

56. Produit logiciel (36) selon la revendication 50, dans lequel les paquets de données acheminent une pluralité d'unités de couche d'abstraction réseau (NAL), chaque unité NAL possédant un ordre de décodage et un numéro d'ordre de décodage (DON) indiquant un ordre de décodage d'unité NAL dans une structure de charge utile pour la transmission, et dans lequel les informations (300) fournies au dispositif client (60) indiquent le numéro de séquence du paquet de données qui achemine la prochaine NAL à décoder et le DON associé à l'ordre de décodage de ladite prochaine NAL.

EP 1 745 609 B1

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                           RTP Header                          |
+-+-+-+-+-+-+-+-+-+-+-+-+-+-+-+-+-+-+-+-+-+-+-+-+-+-+-+-+-+-+-+-+
|MTAP16 NAL HDR |   decoding order number base   | NALU 1 Size  |
+-+-+-+-+-+-+-+-+-+-+-+-+-+-+-+-+-+-+-+-+-+-+-+-+-+-+-+-+-+-+-+-+
|  NALU 1 Size  |  NALU 1 DOND  |        NALU 1 TS offset       |
+-+-+-+-+-+-+-+-+-+-+-+-+-+-+-+-+-+-+-+-+-+-+-+-+-+-+-+-+-+-+-+-+
|  NALU 1 HDR   |  NALU 1 DATA                                  |
+-+-+-+-+-+-+-+-+                                               +
:                                                               |
+               +-+-+-+-+-+-+-+-+-+-+-+-+-+-+-+-+-+-+-+-+-+-+-+-+
|               |  NALU 2 SIZE               |  NALU 2 DOND   |
+-+-+-+-+-+-+-+-+-+-+-+-+-+-+-+-+-+-+-+-+-+-+-+-+-+-+-+-+-+-+-+-+
|  NALU 2 TS offset          |  NALU 2 HDR   |  NALU 2 DATA   |
+-+-+-+-+-+-+-+-+-+-+-+-+-+-+-+-+-+-+-+-+-+-+-+-+                |
|                                                               |
|                            +-+-+-+-+-+-+-+-+-+-+-+-+-+-+-+-+-+
|                            :...OPTIONAL RTP padding           |
+-+-+-+-+-+-+-+-+-+-+-+-+-+-+-+-+-+-+-+-+-+-+-+-+-+-+-+-+-+-+-+-+
```

**Figure 1**

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|X|  CC   |M|     PT      |       sequence number         |
+-+-+-+-+-+-+-+-+-+-+-+-+-+-+-+-+-+-+-+-+-+-+-+-+-+-+-+-+-+-+-+-+
|                           timestamp                           |
+-+-+-+-+-+-+-+-+-+-+-+-+-+-+-+-+-+-+-+-+-+-+-+-+-+-+-+-+-+-+-+-+
|           synchronization source (SSRC) identifier            |
+=+=+=+=+=+=+=+=+=+=+=+=+=+=+=+=+=+=+=+=+=+=+=+=+=+=+=+=+=+=+=+=+
|            contributing source (CSRC) identifiers             |
|                             ....                              |
+-+-+-+-+-+-+-+-+-+-+-+-+-+-+-+-+-+-+-+-+-+-+-+-+-+-+-+-+-+-+-+-+
```

# Figure 2

EP 1 745 609 B1

# FIG. 3

_1_

EP 1 745 609 B1

**EP 1 745 609 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5565924 A, Haskell

- WO 2004008673 A2